(19)

Europäisches Patentamt
European Patent Office
Office européen des brevets

(11) **EP 4 507 110 A1**

(12) **EUROPEAN PATENT APPLICATION**
published in accordance with Art. 153(4) EPC

(43) Date of publication:
**12.02.2025 Bulletin 2025/07**

(21) Application number: **23784830.4**

(22) Date of filing: **20.04.2023**

(51) International Patent Classification (IPC):
**H01M 50/503** (2021.01) **H01M 50/209** (2021.01)
**H01M 50/516** (2021.01) **H01M 50/522** (2021.01)
**H01M 50/526** (2021.01)

(52) Cooperative Patent Classification (CPC):
**H01M 50/209; H01M 50/503; H01M 50/505;
H01M 50/516; H01M 50/522; H01M 50/526;
Y02E 60/10**

(86) International application number:
**PCT/JP2023/015806**

(87) International publication number:
**WO 2023/195547 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.04.2022 JP 2022063340**

(71) Applicant: **Vehicle Energy Japan Inc.
Ibaraki 312-8505 (JP)**

(72) Inventors:
• **ODA Masanari
Hitachinaka-shi, Ibaraki 312-8505 (JP)**
• **KUBOTA Osamu
Hitachinaka-shi, Ibaraki 312-8505 (JP)**
• **URAKI Keiichi
Hitachinaka-shi, Ibaraki 312-8505 (JP)**

• **KAWASAKI Tatsuhiko
Hitachinaka-shi, Ibaraki 312-8505 (JP)**
• **UNNO Akira
Hitachinaka-shi, Ibaraki 312-8505 (JP)**
• **YAMANE Teruki
Hitachinaka-shi, Ibaraki 312-8505 (JP)**
• **YAMASHITA Kohei
Hitachinaka-shi, Ibaraki 312-8505 (JP)**
• **TAKAHASHI Tomoaki
Hitachinaka-shi, Ibaraki 312-8505 (JP)**

(74) Representative: **Strehl Schübel-Hopf & Partner
Maximilianstrasse 54
80538 München (DE)**

Remarks:
The filing date of the international application is
within two months from the date of expiration of the
priority period (R. 26bis.3 PCT)

(54) **BATTERY PACK**

(57) To obtain a small-sized busbar in which a portion overlapping a terminal part of a battery is flat while stress applied to a joining surface is mitigated. A battery pack 1 according to the present invention has: a battery group in which a plurality of unit batteries 2 having positive-electrode terminals 2a and negative-electrode terminals 2b are stacked, with the positive-electrode terminal 2a of one unit battery 2A among mutually adjacent unit batteries 2 and the negative-electrode terminal 2b of the other unit battery 2B being adjacent in the stacking direction; and a busbar 10 for joining the positive-elec-trode terminal 2a of the one unit battery 2A and the negative-electrode terminal 2b of the other unit battery 2B. The busbar 10 has a positive-electrode plate 100 joined to the positive-electrode terminal 2a of the one unit battery 2A, and the negative-electrode plate 200 joined to the negative-electrode terminal 2b of the other unit battery 2B. At least one of the positive-electrode plate 100 and the negative-electrode plate 200 has a step-form shape bent in a stepwise manner, the joining being carried out via the step-form portion.

EP 4 507 110 A1

# FIG. 2

**Description**

Technical Field

The present invention relates to a battery pack.

Background Art

A battery pack including multiple unit batteries such as lithium-ion secondary batteries uses a metal connection member called a busbar to electrically connect the terminals of adjacent unit batteries. The busbar is a flat metal plate member made of aluminum, copper, or iron, for example, and is assembled to the positive and negative electrodes of the unit battery through laser welding, ultrasonic bonding, or a fastener member. Electrode terminals are generally attached to the positive and negative electrodes. The busbar is generally attached so that the planar region of a busbar plate almost covers the principal surface of the electrode terminal, while keeping physical contact with each other, and ensures the size and width larger than or equal to each side of the electrode terminal. Specifically, the planar region of the busbar is formed to be wide, for example, 0.5 to 0.6 mm longer than each side of the principal surface of the electrode terminal. It is advantageous to reduce the busbar resistance by ensuring a larger flat region for the busbar.

The relative distance between the unit batteries constituting a battery pack may change to an unexpected positional relationship due to vibrations during assembly or transportation, for example. The relative distance between the unit batteries may change to an unexpected positional relationship due to energization or expansion and contraction of the unit batteries. Stress may be generated on the positive and negative electrodes of the busbars and unit batteries and may be liable to affect the product.

To relax stress generated on busbars and unit batteries, it is known that a flat plate is bent perpendicularly to the thickness direction by pressing, for example, to form a U-shaped protruding stress relaxation portion at the middle of the busbar in the length direction. This structure is supposed to deform the stress relaxation portion when the busbar thermally expands, making it possible to reduce loads transmitted to the positive and negative electrodes of the unit battery (see patent literature 1, for example). The busbar is generally made of an approximately solid plate, which provides the busbar with a stress relaxation mechanism by bending the flat plate. Examples of materials for approximately solid busbars include solid metal plates made of aluminum, copper, or iron.

Another example of approximately solid busbar materials is a clad material which is a composite material made by processing dissimilar metals into an approximately solid plate (see patent literature 2, for example). The composite material of dissimilar metals is used as a busbar material because the positive and negative terminals generally use different materials. The connection of the terminals and busbars made of similar metals is favorably achieved by laser welding, ultrasonic bonding, for example, or by using fastener members for assembly and favorably provides the rust-preventive effect. A clad material, or an approximately solid plate made of composite material, can be bent during a press process more easily than stepped composite materials such as lap joints.

Patent literature 2 uses a plate as an approximately solid plate fabricated by using a clad material and the technique such as friction stir welding and three-dimensionally processes the single plate by using a method such as press process to fabricate a 3D busbar that provides a moderating effect against loads from any-direction.

The structure according to patent literature 2 can relax stress, but limits the junction plane only in the thickness direction of the materials and requires increasing a junction area. If the busbar is 0.8 mm thick, for example, the joint plane can be provided only in a direction perpendicular to the plate surface by simply using friction stir welding to join plates through butting. If the busbar is 14.4 mm wide, for example, the junction area is as narrow as 12 mm2. For example, various ideas can be considered to increase this junction area, but are not described in detail here. However, an attempt to increase the junction area limited by the plate width requires a complex joint method and a large-scale device to generate joints.

Meanwhile, an attempt to reduce the cost of parts by decreasing the junction area can provide a stress relaxation effect but makes it difficult to ensure the likelihood for the strength of busbar junctions. In addition, patent literature 2 reveals an issue of large size. Specifically, not only a complex 3D structure is provided in the space above the region connecting the principal surfaces of the positive and negative terminals, but also a stress relaxation mechanism is provided by forming a 3D structure including the space above an extension portion of 3 mm or more, for example, in addition to the length of each side of the principal terminal surface in the direction perpendicular to the direction connecting the principal surfaces of the terminals.

In recent years, battery packs are miniaturized and busbars connecting the batteries in the battery pack are also required to be miniaturized, making it difficult to ensure the space within the battery pack to provide the complex 3D shape described in patent literature 2. In addition, there is also the issue of requiring many parts to acquire a structure to relax stress. For example, an estimation of the busbar size described in patent literature 2 reveals that the busbar between one set of terminals requires a volume of 450 mm3 or more even if the plate is 0.8 mm thick. This value is larger than the volume in the embodiment described later, and a larger volume tends to increase electrical resistance, requiring a technique to solve these issues on the battery pack.

Available busbar materials may include not only the composite material for approximately solid plates but also a lap joint, for example, a composite material that is not a solid plate. Available connection methods for acquiring a lap joint structure include laser welding, ultrasonic bonding, and friction stir welding, for example. However, it is difficult to provide a sufficient junction area inside a miniaturized battery pack. A method to solve this issue is reported to provide a junction plane on the upper surface of the busbar placed on the terminal surface (see patent literature 3, for example). An expected busbar is acquired by joining a flat plate and another plate having a raised portion. Patent literature 3 is advantageous in increasing the junction area, but leaves junction marks on the principal terminal surface, causing irregularities on the terminal top. Irregularities cause contact resistance when the terminal and busbar are assembled by laser welding, ultrasonic junction, or using a fastener member, further requiring a technique to solve the process difficulties.

Patent literature 4 reports the busbar including two plates that are raised and joined to cover the principal terminal surface. This shape can provide a junction plane where plates are butted and is advantageous in increasing the junction area. As a drawback, however, the junction plane is perpendicular to the direction of stacking the batteries. This affects the expansion and contraction of the battery. The battery expands and contracts slightly when charged and discharged, or used for 10 years or more, for example. According to patent literature 4, the junction area is structured perpendicularly to the battery stacking direction, and stress due to the expansion and contraction is applied perpendicularly to the junction plane and acts as a peeling stress. It is generally known that the peel stress of bonding materials is smaller than the shear stress. It is unfavorable to provide a junction plane in the battery stacking direction.

In light of the above, there has been expected a junction busbar that includes a large junction area, ensures a small size, and includes a junction plane shaped like a lap joint whose surface is approximately flat to ensure contact between the busbar and the battery.

Citation List

Patent Literature

Patent Literature 1: Japanese Unexamined Patent Application Publication No. 2007-73266
Patent Literature 2: Japanese Unexamined Patent Application Publication No. 2017-73398
Patent Literature 3: WO2020/183817
Patent Literature 4: Japanese Unexamined Patent Application Publication No. 2016-115458

Summary of Invention

Technical Problem

Conventional busbar shapes have been proposed so that the busbar is three-dimensionally structured to relax stress on the positive and negative electrodes, as described in patent literatures 1 and 2. However, these structures use plates made of approximately solid plates. When clad materials using dissimilar metals are used as approximately solid plates, the junction area of the junction plane between the used plates is limited only in the plate thickness direction, making it difficult to increase the junction area. Patent literature 2 provides the stress relaxation mechanism to avoid stress concentration on a narrow junction plane and destruction but leaves an issue of large parts.

As reported in patent literature 4, the busbar shaped like a lap joint is used without using an approximately solid plate. However, when only the raised portion is provided and the junction plane is provided on the raised portion as in this known example, stress on the junction plane is not sufficiently relaxed, and the busbar height increases. In addition, when the junction plane is provided in a direction perpendicular to the battery stacking direction, the stress in the peeling direction is applied to the junction plane during long-term use in consideration of the expansion and contraction of the battery, and there are concerns about long-term use.

As reported in patent literature 3, the junction plane is provided in a direction parallel to the battery stacking direction. As reported in patent literature 4, the busbar is provided with an extension portion only from the positive or negative electrode side and is joined to the other flat plate. According to these reports, however, the junction plane needs to be provided for a part overlapping with the battery terminal surface. When the terminal and the busbar are physically and electrically connected, irregularities in the flat plate on the top of the terminal may increase the contact resistance, making the handling difficult.

The present invention has been made in consideration of the foregoing and aims to provide a small busbar that relaxes stress on the junction plane between dissimilar metals and flatly overlaps with the principal surface of a battery electrode terminal.

Solution to Problem

To solve the above-described issues, a battery pack according to the present invention includes a battery group in which multiple unit batteries each including a first electrode terminal and a second electrode terminal are stacked so that the first electrode terminal of one of the adjacent unit batteries is adjacent to the second electrode terminal of the other unit battery in a stacking direction, and a busbar connecting the first electrode terminal of the one unit battery with the second electrode terminal of the other unit battery. The busbar includes a first conductive plate connected to the first electrode terminal of the one unit battery, a second conductive plate connected to the second electrode terminal of the other unit battery. At least one of the first conductive plate and the second conductive plate includes a stepwise bent stepped shape.

Advantageous Effects of Invention

The present invention can provide a small busbar that relaxes stress on the junction plane and flatly overlaps with the principal surface of a unit battery electrode terminal. Further features related to the present invention will become apparent from the description of the present specification and the accompanying drawings. Problems, configurations, and effects other than those described above will become apparent from the description of the following embodiments.

Brief Description of Drawings

FIG. 1 is an exploded perspective view of an embodiment of the battery pack according to the present invention.
FIG. 2 is an external perspective view of one embodiment of the busbar illustrated in FIG. 1.
FIG. 3 is an exploded perspective view of one embodiment of the busbar illustrated in FIG. 1.
FIG. 4 is an external perspective view illustrating the positional relationship with the terminals in a first embodiment of the busbar according to the present invention.
FIG. 5 is an external perspective view of a first comparative embodiment.
FIG. 6 is an external perspective view of a second embodiment of the busbar according to the present invention.
FIG. 7 is an external perspective view of a third embodiment of the busbar according to the present invention.
FIG. 8 is an external perspective view of a fourth embodiment of the busbar according to the present invention.
FIG. 9 is an external perspective view of a fifth embodiment of the busbar according to the present invention.
FIG. 10 is an external perspective view of a sixth embodiment of the busbar according to the present invention.
FIG. 11 is an external perspective view of a seventh embodiment of the busbar according to the present invention.
FIG. 12 is an external perspective view of an eighth embodiment of the busbar according to the present invention.
FIG. 13 is an external perspective view of a ninth embodiment of the busbar according to the present invention.
FIG. 14 is an external perspective view of a tenth embodiment of the busbar according to the present invention.
FIG. 15 is an external perspective view of an eleventh embodiment of the busbar according to the present invention.
FIG. 16 is an external perspective view of a twelfth embodiment of the busbar according to the present invention.
FIG. 17 is an external perspective view of a thirteenth embodiment of the busbar according to the present invention.
FIG. 18 is an external perspective view of a fourteenth embodiment of the busbar according to the present invention.
FIG. 19 is an external perspective view of a fifteenth embodiment of the busbar according to the present invention.
FIG. 20 is an external perspective view of a sixteenth embodiment of the busbar according to the present invention.
FIG. 21 is an external perspective view of a seventeenth embodiment of the busbar according to the present invention.
FIG. 22 is an external perspective view of an eighteenth embodiment of the busbar according to the present invention.
FIG. 23 is an external perspective view of a nineteenth embodiment of the busbar according to the present invention.
FIG. 24 is an external perspective view of a twentieth embodiment of the busbar according to the present invention.
FIG. 25 is an external perspective view illustrating the positional relationship with the terminals in a twentieth embodiment of the busbar according to the present invention.
FIG. 26 is an external perspective view of a twenty-first embodiment of the busbar according to the present invention.
FIG. 27 is an external perspective view of a twenty-second embodiment of the busbar according to the present invention.
FIG. 28 is an external perspective view of a twenty-third embodiment of the busbar according to the present invention.
FIG. 29 is an external perspective view of a twenty-fourth embodiment of the busbar according to the present invention.
FIG. 30 is an external perspective view of a twenty-fifth embodiment of the busbar according to the present invention.
FIG. 31 is an external perspective view of a twenty-sixth embodiment of the busbar according to the present invention.
FIG. 32 is an external perspective view of a twenty-seventh embodiment of the busbar according to the present invention.
FIG. 33 is an external perspective view of a twenty-eighth embodiment of the busbar according to the present invention.

Description of Embodiments

The description below explains an embodiment of the battery pack according to the present invention by reference to the drawings. The configuration of the present invention is not limited to configurations of the embodiments described below, and various modifications can be made without departing from the spirit and scope of the invention. In the following description, an upper surface may signify the surface provided with terminals of a unit battery 2 and a lower surface may signify the surface opposite the upper surface. The upper surface and lower surface are names for explanatory convenience and do not indicate the actual arrangement of the unit battery 2.

[Structure of Battery Pack]

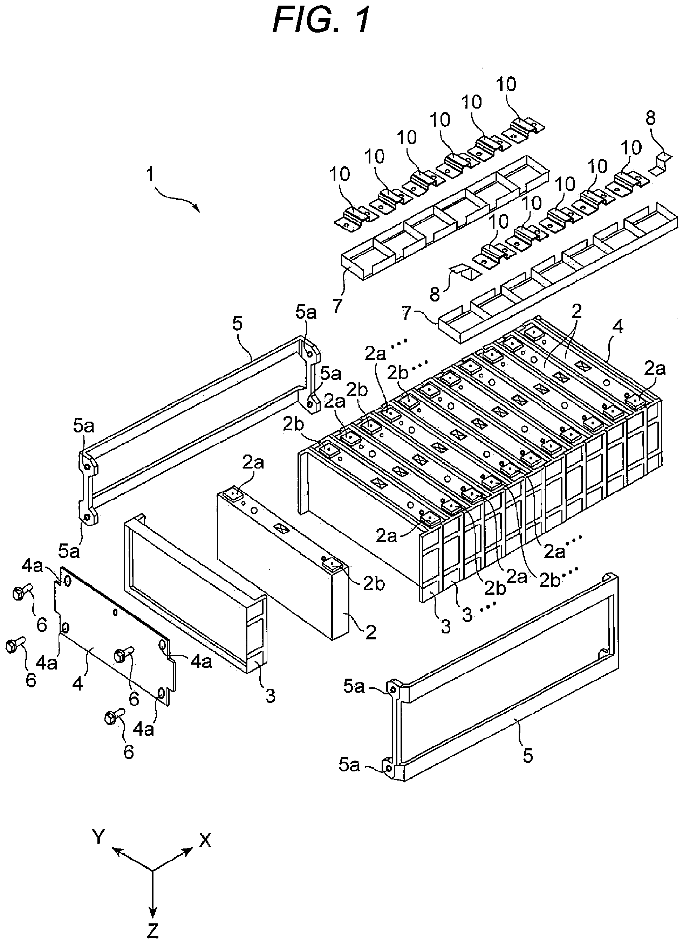

FIG. 1 is an exploded perspective view of an embodiment of the battery pack according to the present invention. As illustrated in FIG. 1, the battery pack 1 is structured so that multiple unit batteries 2 are fastened by a pair of end plates 4 and a pair of side plates 5. The unit battery 2 is available as a rectangular lithium-ion secondary battery, for example.

The rectangular unit battery 2 is shaped into a rectangular solid including an upper surface, a lower surface, a pair of large flat surfaces, and a pair of small side surfaces. The unit batteries 2 are stacked in a row in the stacking direction so that the large flat surfaces face each other. Holders 3 are inserted between unit batteries 2 and are attached to the front of the first unit battery 2 in the row and to the end of the last unit battery 2 in the row.

All unit batteries 2 have the same size, shape, and structure. The unit battery 2 includes a positive-electrode terminal 2a as a first electrode terminal and a negative-electrode terminal 2b as a second electrode terminal, on a battery cover corresponding to the upper surface. Adjacent unit batteries 2 are placed so that the positive-electrode terminal 2a and the negative-electrode terminal 2b are positioned next to each other, in other words, the front and back planes are alternately inverted. The positive-electrode terminal 2a is made of aluminum or an aluminum alloy, for example. The negative-electrode terminal 2b is made of copper or a copper alloy, for example.

End plates 4 are placed in front of the first holder 3 in the row and behind the last holder 3 in the row. A pair of end plates 4 are made of metal or resin material and is approximately shaped into a rectangle. The four corners include openings 4a through which bolts 6 are inserted. A pair of side plates 5 are attached to the sides of the unit batteries 2 positioned in a row. Each side plate 5 is a rectangular frame including vertically separated beam portions and connecting portions to connect the beam portions. Openings 5a are formed at each corner of the frame corresponding to the openings 4a of the end plates 4.

The end plate 4 at the front of the row and the end plate 4 at the rear of the row are positioned inside the front and rear connecting portions of each side plate 5. The battery pack 1 is secured by fastening the bolts 6 inserted into the openings 5a of the side plates 5 and the openings 4a of the end plates 4. The bolts 6 are screwed into threaded holes (unshown) formed in the holder 3, or fastened with nuts (unshown) on the back side of the end plates 4. Rivets may be used for fastening instead of fastening with the bolts 6.

An insulating cover 7 is placed on the upper side of each unit battery 2 to surround the positive and negative electrode terminals 2a and 2b of the unit batteries 2 placed in a row. A busbar 10 connects the positive electrode terminal 2a of one of unit batteries 2 and the negative electrode terminal 2b of the other of unit batteries 2 that are placed adjacent to each other. One end of the busbar 10 is joined to the positive electrode terminal 2a of one unit battery 2. The other end thereof is joined to the negative electrode terminal 2b of the other unit battery. The busbar 10 serially connects all unit batteries 2 constituting a battery group of the battery pack 1. End busbars 8 are connected to the positive-electrode terminal 2a of the unit battery 2 at the beginning of the row and the negative-electrode terminal 2b of the unit battery 2 at the end of the row. The busbar 10 or the end busbar 8 is joined to the positive and negative electrode terminals 2a and 2b by laser welding or ultrasonic junction, for example. The connection may use mechanical fastening such as screwing instead of laser welding or ultrasonic junction.

The busbars 10 may have any shape as long as the configuration includes the technical features of the present invention. For example, the two types of shapes illustrated in FIG. 1 can be placed in the battery pack 1. The adjacent busbars 10 positioned on the sides of the side plate 5 all have the same shape and structure. Contrastingly, the busbars 10 positioned on the opposite side of the side plate 5 can be point-symmetric concerning the busbar group described above. However, the shape does not necessarily need to be point-symmetric as long as the configuration can include the technical features of the present invention. Different shapes can provide the same effect as long as the busbar plate material and the terminals of the unit battery electrically connected to it are placed to configure the same member and that the configuration includes the technical features of the present invention. The end busbar 8 includes an attachment surface connected to one of the positive and negative electrode terminals 2a and 2b of the unit battery 2 and is provided with a through hole (unshown) for screwing at the end opposite the attachment surface.

Each embodiment of the present invention is characterized by the structure of the busbar 10. The description below explains an embodiment of the busbar 10.

[Structure of Busbar]

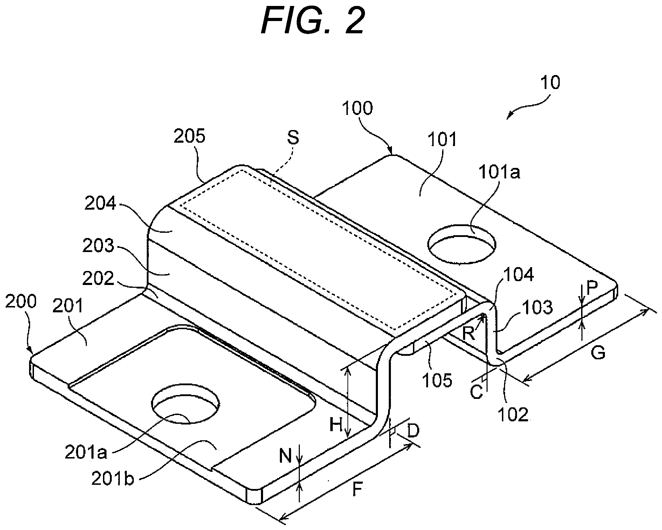

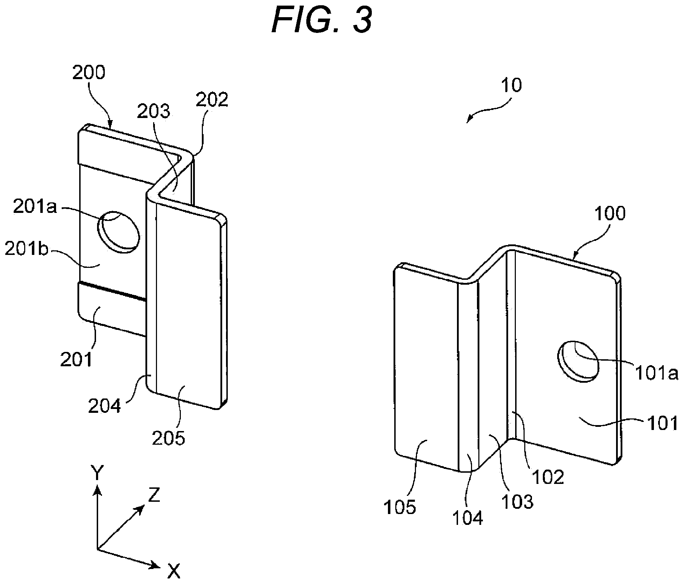

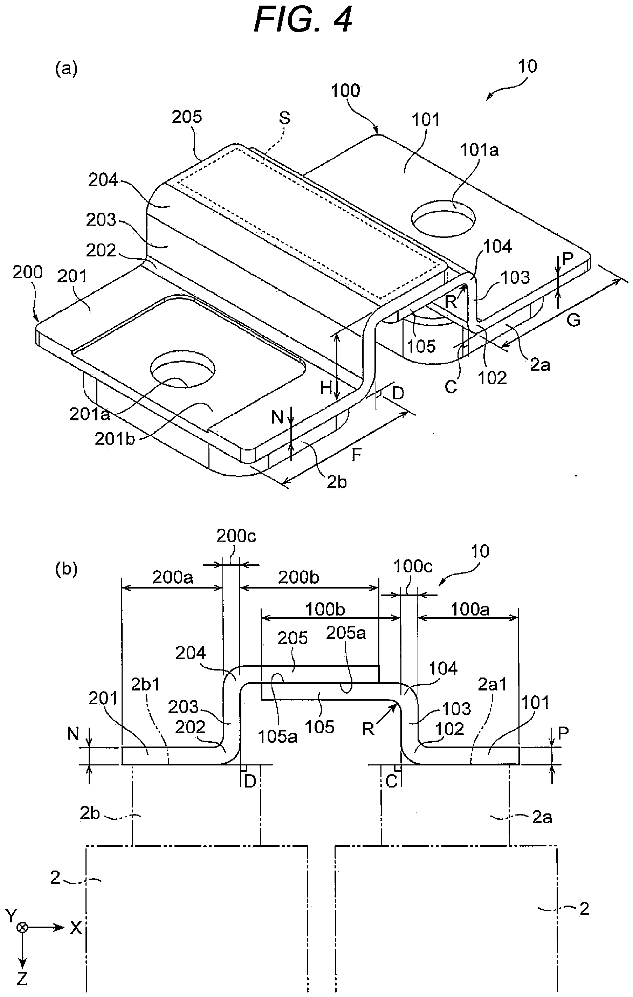

FIG. 2 is an external perspective view of an embodiment of the busbar illustrated in FIG. 1. FIG. 3 is an exploded perspective view. FIG. 4 is a diagram illustrating the positional relationship between the busbar and a terminal according to the first embodiment.

The busbar 10 includes a positive-electrode plate (first conductive plate) 100 formed by pressing a sheet of metal made of aluminum or an aluminum alloy; and a negative-electrode plate (second conductive plate) 200 formed by pressing a sheet of metal made of copper or a copper alloy, a material being different from a positive-electrode plate 100. In the description below, the X direction, the Y direction perpendicular to the X direction, and the Z direction perpendicular to the X and Y directions follow the indications illustrated in the drawings.

As illustrated in FIG. 4, the busbar 10 includes the positive-electrode plate 100, as a positive-side conductive member, connected to the positive-electrode terminal 2a of a unit battery 2A adjacent to a unit battery 2B; and a negative-electrode plate 200, as a negative-side conductive member, connected to the negative-electrode terminal of the unit battery 2B. The positive-electrode plate 100 and the negative-electrode plate 200 each include step portions 100c and 200c stepwise bent on at least one side, as illustrated in FIG. 4(b), for example. The tip portions 100b and 200b are connected to each other via the step portions 100c and 200c.

For example, the positive-electrode plate 100 includes a first base end portion 100a joined to the positive-electrode terminal 2a as the first electrode terminal of the unit battery 2A; and a first tip portion 100b extending from the end of the first base end portion 100a toward the unit battery 2B along the stacking direction of the unit batteries 2 in a direction to approach the negative-electrode terminal 2b of the unit battery 2B. A first step portion 100c is positioned between the first base end portion 100a and the first tip portion 100b.

The negative-electrode plate 200 includes a second base end portion 200a joined to the negative-electrode terminal 2b as the second electrode terminal of the unit battery 2B, and a second tip portion 200b that extends from the end of the second base end portion 200a at the side of the unit battery 2A along the stacking direction of the unit batteries 2 toward the negative-electrode terminal 2a of the unit battery 2A and is joined to the first tip portion 100b of the positive-electrode plate 100. A second step portion 200c is positioned between the second base end portion 200a and the second tip portion 200b of the negative-electrode plate 200.

The first base end portion 100a of the positive-electrode plate 100 includes a flat positive-side first plate portion 101 joined to a principal terminal surface 2a1 of the positive-electrode terminal 2a. The first step portion 100c includes a bent portion (bent portion toward the first base end portion) 102 bent at the end of the first base end portion 100a in a direction to rise from the first base end portion 100a; a positive-side second plate portion 103 as a first raised portion rising from a bent portion 102; and a bent portion (bent portion toward the first tip portion) 104 bent at the end of the positive-side second plate portion 103, corresponding to the rising direction, in a direction to approach the negative-electrode terminal 2b of the unit battery 2B along the stacking direction of the unit battery 2.

The bent portion 102 at the first base end portion 100a is bent at the end of the positive-side first plate portion 101 toward the negative-electrode terminal 2b of the unit battery 2B in a rising direction perpendicular to the positive-side first plate portion 101. The bent portion 104 toward the first tip portion 100b is bent to rise at the end of the positive-side second plate portion 103 in the direction to leave the first base end portion 100a.

The first tip portion 100b of the positive-electrode plate 100 includes a positive-side third plate portion 105 extending from the bent portion 104 to the negative-electrode terminal 2b of the unit battery 2B. The positive-side third plate portion 105 includes a first junction portion 105a that is overlapped and joined to the negative-side third plate portion 205 of the second tip portion 200b of the negative-electrode plate 200. The positive-side second plate portion 103 is bent by the bent portion 102 at the end of the positive-side first plate portion 101 toward the negative-electrode terminal 2b and rises in a direction to intersect the stacking direction and leave the unit battery 2, namely, perpendicular to the positive-side first plate portion 101 according to the present embodiment.

The second base end portion 200a of the negative-electrode plate 200 includes a flat negative-side first plate portion 201 that is joined to a principal terminal surface 2b1 of the negative-electrode terminal 2b. The second step portion 200c includes a bent portion (bent portion toward the second base end portion) 202 bent at the end of the second base end portion 200a in a direction to rise from the second base end portion 200a; a negative-side second plate portion 203 as a second raised portion rising from a bent portion 202; and a bent portion (bent portion toward the second tip portion) 204 bent at the end of the negative-side second plate portion 203, corresponding to the rising direction, in a direction to approach the positive-electrode terminal 2a of the unit battery 2A along the stacking direction of the unit battery 2.

The bent portion 202 at the second base end portion 200a is bent at the end of the negative-side first plate portion 201 toward the positive-electrode terminal 2a of the unit battery 2A in a rising direction perpendicular to the negative-side first plate portion 201. The bent portion 204 toward the second tip portion 200b is bent to rise at the end of the negative-side second plate portion 203 in the direction to leave the second base end portion 200a.

The second tip portion 200b of the negative-electrode plate 200 includes a negative-side third plate portion 205 extending from the bent portion 204 to the positive-electrode terminal 2a of the unit battery 2A. The negative-side third plate portion 205 includes a second junction portion 205a that is overlapped and joined to the positive-side third plate portion 105 of the first tip portion 100b of the positive-electrode plate 100. The negative-side second plate portion 203 is bent by the bent portion 202 at the end of the negative-side first plate portion 201 toward the positive-electrode terminal 2a and rises in a direction to intersect the stacking direction and leave the unit battery 2, namely, perpendicular to the negative-side first plate portion 201 according to the present embodiment.

The positive-side third plate portion 105 and the negative-side third plate portion 205 are overlapped and joined in a direction perpendicular to the principal terminal surface 2a1 of the positive-electrode terminal 2a and the principal terminal surface 2b1 of the negative-electrode terminal 2b. The junction plane between the positive-side third plate portion 105 and the negative-side third plate portion 205 extends approximately parallel to the stacking direction of the unit battery 2. The approximately parallel extension is just an example and may be tilted. For example, if the rising height of the positive-side second plate portion 103 at the positive-electrode terminal 2a is slightly lower than the height of the negative-side second plate portion at the negative-electrode terminal, the metal plates may be tilted and extend toward the other terminals so that the third plate portions 105 and 205 overlap each other. According to the present embodiment, as illustrated in FIG. 4, the junction plane between the positive-side third plate portion 105 and the negative-side third plate portion 205 is configured so that the width in the stacking direction of the unit battery 2 is larger than or equal to the distance between the positive-electrode terminals 2a and negative-electrode terminals 2b adjacent to each other.

The description below explains each part of the busbar 10.

The busbar 10 needs to be flat at the parts corresponding to the principal terminal surfaces 2a1 and 2b1. When the terminal and the busbar are to be joined in the subsequent process based on some methods (such as laser welding (LBW), ultrasonic junction (USW), swaging, screw fastening, clamp fastening, and surface pressure fastening), irregularities, if any, on the part of the busbar to be placed on the principal terminal surface may cause unsuccessful pressing or junction during the junction process. In other words, gaps may easily occur between the busbar and the principal terminal surface. Gaps can cause welding defects or voids and are particularly unfavorable for laser welding. Gaps cause an increase in the contact resistance and are also unfavorable for the fastening. The positive-side first plate portion 101 and the negative-side first plate portion 201 favorably use flat plates that are approximately parallel to the principal terminal surfaces 2a1 and 2b1 and overlap the principal terminal surfaces 2a1 and 2b1 to ensure a planar junction without any gaps. A flatness error of the first plate portions 101 and 201 is favorably ±0.5 mm or less. More favorably, it is ±0.4 mm or less, and most favorably, it is ±0.3 mm or less.

In addition, the present embodiment uses the busbar including the step portions 100c and 200c because it is favorable to join dissimilar metals at a location whose height differs from the height of the principal terminal surfaces 2a1 and 2b1 in the module, namely, at a position that is vertically distant from the principal terminal surfaces 2a1 and 2b1. This is because the busbar itself becomes less rigid. In other words, the busbar can be easily deformed to decrease stress applied to the busbar itself when displacement is applied due to the expansion and contraction of the battery itself or vibration during practical use.

Namely, the busbar 10 includes the step portion 100c between the base end portion 100a and the tip portion 100b and the step portion 200c between the base end portion 200a and the tip portion 200b. The busbar 10 as a whole can decrease rigidity to be flexible and easily elastically deformed, compared to conventional flat, plate-shaped busbars. When stress is applied to the busbar 10 of the battery pack 1 in at least one of the X, Y, and Z directions, for example, the shape of the busbar 10 can be actively deformed to relax the stress on the junction plane between the positive-side third plate portion 105 and the negative-side third plate portion 205 (between the first junction portion 105a and the second junction portion 205a). The third plate portions 105 and 205 are joined to each other, making it possible to ensure the flat junction planes for the first plate portions 101 and 201 overlapping with the principal terminal surfaces 2a1 and 2b1 and increase the strength of joining to the principal terminal surfaces 2a1 and 2b1 by welding, for example.

There is no restriction on the distance between the positive-electrode third plate portion 2a and the positive-side third plate portion 105 and the distance between the negative-electrode terminal 2b and the negative-side third plate portion 205 due to the raised second plate portions 103 and 203 as long as the battery pack 1 as a battery module permits the storage space. However, too long a distance increases the electrical resistance of the busbar 10, and too short a distance decreases the effect of stress relaxation. Therefore, the distance between the positive-electrode third plate portion 2a and the third plate portion 105 and the distance between the negative-electrode terminal 2b and the third plate portion 205 each are favorably 0.1 mm or more and 50 mm or less, more favorably 1 mm or more and 20 mm or less, and even more favorably 2 mm or more and 10 mm or less. The height of the busbar 10 can be adjusted by adjusting the height of at least one of the second plate portions 103 and 203 having no junction plane. The busbar 10 can be miniaturized.

The rise angle of the bent portion 102 between the second plate portion 103 and the first plate portion 101 and the rise angle of the bent portion 202 between the second plate portion 203 and the first plate portion 201 are not particularly limited as long as the effect of the present embodiment is acquired. A change in the angle can increase or decrease the areas of the positive-side third plate portion 105 and the negative-side third plate portion 205. A method known as L-bending may be used to bend the metal approximately 90° against the first plate portion. Alternatively, a method known as V-bending may be used to form bending angles ranging from an acute angle to an obtuse angle between the first plate portion 101 and the second plate portion 103 and between the first plate portion 201 and the second plate portion 203. The bending angle of the bent portions 102 and 202 may not be particularly limited as long as the effect of the present embodiment is acquired but is favorably 30° or larger and 150° or smaller, more favorably 45° or larger and 135° or smaller, and most favorably 60° or larger and 120° or smaller. The positive-side second plate portion 103 and the negative-side second plate portion 203 may use different rising angles for the bent portions 102 and 202.

The present embodiment provides the third plate portions 105 and 205 extending from the rising ends of the second plate portions 103 and 203 toward the terminals of the adjacent electrodes so that the junction planes of the third plate portions 105 and 205 can be provided approximately parallel to the stacking direction of the unit batteries 2. When the junction plane between the positive-side third plate portion 105 and the negative-side third plate portion 205 is provided parallel to the stacking direction of the unit batteries 2, stress is applied to the third plate portions 105 and 205 of the busbar 10 mainly in the shear direction if the unit battery 2 expands and contracts during charging and discharging, or after long-term use for 10 years or more, for example. It is known that stress applied to the junction plane in the shear direction increases the static strength of the junction plane several times more than stress applied in the peeling direction. It is possible to provide the busbar 10 and the battery pack 1 that are hardly subject to fatigue failure or shear failure.

The second plate portions 103 and 203 provide an additional advantage of allowing the height of the third plate portions 105 and 205 to differ from the height of the principal terminal surfaces 2a1 and 2b1. An example follows. Suppose a solvent enters the battery pack 1 when the unit battery 2 in the battery pack 1 is positioned so that the principal terminal surfaces 2a1 and 2b1 of the unit battery 2 are oriented upward. If the principal terminal surface is as high as the junction plane including the dissimilar metal junction plane, the solvent drips at a limited location and easily stagnates. If the third plate portions 105 and 205 and the principal terminal surfaces 2a1 and 2b1 maintain different heights in the module, the solvent tends to drip and flow toward lower potential energy, hardly causing corrosion on the third plate portions 105 and 205 made of dissimilar metals. It is generally known that dissimilar metals by contact with a solvent corrodes much faster than single metals. The second plate portions 103 and 203 can be given the effect of changing the busbar height in the module as a configuration to suppress corrosion. However, there has been described an example that the junction plane between the third plate portion 105 of the positive-electrode plate 100 and the third plate portion 205 of the negative-electrode plate 200 is configured to be higher than the principal terminal surfaces 2a1 and 2b1. The effect of stress relaxation can also be acquired by configuring the junction plane to be lower than the principal terminal surfaces 2a1 and 2b1.

There are no particular limitations on the magnitude of a bend R (R portion) between the first plate portion 101 and the second plate portion 103, between the first plate portion 201 and the second plate portion 203, between the second plate portion 103 and the third plate portion 105, or between the second plate portion 203 and the third plate portion 205. An examination of the present embodiment revealed that the effect of the present embodiment can be acquired regardless of whether the bend R is increased or decreased. A large bend R may allow the bent portion itself to be regarded as a separate flat portion. It is found that there is also the effect of relaxing stress on the junction plane between the third plate portions 105 and 205 even if the above-described bend R is provided for the configuration including the raised portions (second plate portions 103 and 203) extending in a direction away from the principal terminal surfaces 2a1 and 2b1 and the junction plane between the third plate portions 105 and 205 extending from the raised portions toward the other terminals according to the present embodiment. The magnitude of the bending radius is favorably 0.001 mm or larger and 8 mm or smaller, more favorably 0.01 mm or larger and 4 mm or smaller, and most favorably 0.1 mm or larger and 2 mm or smaller.

In addition, the present embodiment can adjust the positions of raising the second plate portions 103 and 203 from the first plate portions 101 and 201. Areas of the third plate portions 105 and 205 can be freely adjusted when the distance between the terminals 2a and 2b of the adjacent unit batteries 2A and 2B is fixed. For example, it is possible to increase junction area S between the principal terminal surface 2a1 or 2b1 and the busbar 10 and decrease the overlapped area of the junction plane between the positive-side third plate portion 105 and the negative-side third plate portion 205.

As another example, it is possible to decrease the junction area between the principal terminal surface 2a1 or 2b1 and the busbar 10 and increase the overlapped area between the positive-side third plate portion 105 and the negative-side third plate portion 205. This means that the rising positions can be specified as requested according to stress applied to the third plate portions 105 and 205 in the busbar 10. When the positive-side third plate portion 105 and the negative-side third plate portion 205 are joined to each other by friction stir welding, for example, an increase in the overlapped area can ensure a sufficient junction area and provide the required junction strength.

The present embodiment particularly focuses on an increase in the overlapped area between the positive-side third plate portion 105 and the negative-side third plate portion 205. However, any configuration may be available as long as the effects of the present embodiment can be acquired. The distance between the terminals 2a and 2b of the adjacent unit batteries 2A and 2B is fixed when the overlapped area between the positive-side third plate portion 105 and the negative-side third plate portion 205 is increased. One of the features of the present embodiment is to provide the second plate portions 103 and 203 as raised portions that raise the busbar 10 to cover the principal terminal surfaces 2a1 and 2b1 in the space above the unit battery 2 without physical contact between the busbar 10 and part of the principal terminal surface toward the adjacent electrode terminal.

However, the positional relationship of the raised portions is an example, and any positional relationship is acceptable as long as the configuration of the present embodiment is satisfied. The raised portion may be provided at any position as long as a required junction area can be ensured and the required strength can be acquired from the junction plane. For example, the raised portion may be provided to cover only at least part of the principal terminal surface 2a1 of the adjacent electrode terminal 2a out of the adjacent electrode terminals 2a and 2b without physical contact. In addition, the raised portion may be provided while maintaining the positional relationship to rise to cover the principal terminal surface 2b1 of the electrode terminal 2b. Alternatively, the raised portion may be provided to cover only parts of the principal terminal surfaces 2a1 and 2b1 of the adjacent electrode terminals 2a and 2b without physical contact. Furthermore, it may be favorable to cover the principal terminal surfaces 2a1 and 2b1 of the adjacent electrode terminals 2a and 2b and allow physical contact as long as the junction area can be ensured. There are no particular limitations on the percentage of an area where the first plate portions 101 and 201 of the busbar 10 cover the principal terminal surfaces 2a1 and 2b1 while maintaining the physical and electric contact as long as the electrical connection is ensured between the busbar 10 and the terminals 2a and 2b and a required junction area S is ensured for the junction plane between the third plate portions 105 and 205. Favorably, the percentage is 20% or more, more favorably 50% or more, and even more favorably 70% or more.

In addition, members may be reduced if the member resistance or the strength of the junction to the terminals 2a and 2b satisfies the required values. For example, lengths F and G of the first plate portions 101 and 201 of the busbar 10 may be decreased so that the busbar does not cover the principal terminal surface on the side other than the electrode terminal side except for the upper part of one side of the principal terminal surfaces 2a1 and 2b1 of the electrode terminals 2a and 2b toward the adjacent electrode terminals. For example, at least one of the positive-side first plate portion 101 and the negative-side first plate portion 201 may respectively contact with the positive-electrode terminal 2a or the negative-electrode terminal 2b and may overlap in a region smaller than the principal terminal surface 2a1 of the positive-electrode terminal 2a and the principal terminal surface 2b1 of the negative-electrode terminal 2b. The electrical resistance between the busbar 10 and the terminals 2a and 2b does not increase significantly as long as they are joined by laser welding or ultrasonic junction, or assembled by using a fastener member even if the busbar 10 does not always entirely cover the terminals. In addition, the electrical resistance, if it matters, can be reduced by increasing the plate thickness or by moving the junction location without changing the positional relationship between the busbar and the terminals.

There are no particular limitations on methods of joining the third plate portions 105 and 205. It may be favorable to use solid-state welding such as ultrasonic junction and friction stir welding, melt welding such as laser welding and arc welding, and resistance welding such as spot welding. The present embodiment uses the ultrasonic junction which is only one example. Any junction method may be used for a busbar shaped like a lap joint. Each of these junction methods generates a specific junction mark during the junction. Generally, the larger the junction area, the greater the junction strength. However, it has been difficult to provide a third plate portion between the terminals parallel to the battery stacking direction despite the expected miniaturization. It is difficult to provide a third plate portion parallel to the stacking direction under the condition that the busbar covers the principal terminal surface while ensuring physical and electrical connection. There was no choice but to provide a junction plane on the top of the terminal as described in patent literature 3, for example. However, the configuration according to the present embodiment can increase the junction area compared to the conventional technique and can be expected to provide the effect of reducing the stress applied to the junction plane.

According to the present embodiment, the positive-side third plate portion 105 and the negative-side third plate portion 205 are joined to vertically overlap in the rising direction of the positive-side second plate portion 103 and the negative-side second plate portion 203. The positive-side third plate portion 105 is positioned below the negative-side third plate portion 205. In terms of the third plate portions 105 and 205, there are no particular limitations on the positional relationship between the negative-side third plate portion 205 and the positive-side third plate portion 105. When viewed from the principal terminal surfaces 2a1 and 2b1, the negative-side third plate portion 205 may be layered on the positive-side third plate portion 105. The negative-side third plate portion 205 may be layered under the positive-side third plate portion 105. Either case can ensure the effect of the present embodiment. For example, the configuration of layering the negative-side third plate portion 205 on the positive-side third plate portion 105 can increase the volume of the negative-electrode plate 200 made of a copper alloy marked by a low battery resistance value and can ensure high conductivity. Meanwhile, the configuration of layering the positive-side third plate portion 105 on the negative-side third plate portion 205 can increase the volume of the positive-electrode plate 100 made of an aluminum alloy marked by low material cost and can save costs for the entire busbar 10.

The busbar 10 may include holes 101a and 201a or notches at required locations, for example. There are no particular limitations on the sizes of the holes 101a and 201a. It may be favorable to provide holes with a diameter of 6 mm or smaller, for example. There are no particular limitations on the sizes and positions of the holes 101a and 201a as long as they can function as the busbar 10. The busbar 10 may also be integrally formed with a terminal to attach a voltage detection wire or a thermometer, for example.

There are no particular limitations on the thickness of the positive-electrode plate 100 and negative-electrode plate 200 used for the busbar 10 as long as the effects of the present embodiment are acquired. It may be favorable to avoid plate thickness that is too large because an increase in plate thickness also increases the stress on the junction plane of the third plate portions 105 and 205. It may be favorable to avoid a plate thickness that is too small because a thin plate increases the battery resistance values of the busbar 10. The plate thickness of the busbar 10 is favorably 0.1 mm or larger and 3 mm or smaller, more favorably 0.3 mm or larger and 2 mm or smaller, and most favorably 0.4 mm or larger and 1.5 mm or smaller.

The plate thickness may be decreased in a specific region of the busbar 10. This is applicable when a decrease in thickness tends to improve the junction of the third plate portions 105 and 205. This is also applicable when a decrease in thickness can relax stress. Methods of decreasing the thickness include cutting or pressing, for example.

No plating may be applied to the positive-electrode plate 100 and negative-electrode plate 200 used for the busbar 10. Either or both the positive-electrode plate 100 and negative-electrode plate 200 may be plated. Examples of plating include electrolytic nickel plating, electroless nickel plating, tin plating, zinc plating, chrome plating, gold plating, silver plating, copper plating, and rhodium plating. Any plating may be used as long as the configuration of the present embodiment can be provided. Among these, nickel plating is particularly favorable, and electrolytic nickel plating is much more favorable. It may be most favorable to apply electrolytic nickel plating to a copper plate used for the positive-electrode plate 100 or the negative-electrode plate 200, and then join it to an aluminum plate by USW (ultrasonic welding) via the electrolytic nickel plating. There are no particular limitations on the thickness of plating as long as the configuration of the present embodiment can be provided. For example, it is favorable 1 $\mu$m or more and 100 $\mu$m or less, more favorable 2 $\mu$m or more and 50 $\mu$m or less, and even more favorable 3 $\mu$m or more and 10 $\mu$m or less. There are no particular limitations on the gloss, which is favorably 0.2 or more and less than 4, more favorably 0.3 or more and less than 3, and even more favorably 0.6 or more and less than 2.5. The same type or different types of plating may be applied to the positive-electrode plate 100 and the negative-electrode plate 200.

There are no particular limitations on alloy systems and thermal refining of the metal materials used for the busbar 10 as long as the effect of the present embodiment can be acquired. For example, aluminum alloys may use any alloy system such as 1000, 2000, 3000, 4000, 5000, 6000, 7000, or 8000. Copper alloys may use any alloy system such as 1000, 2000, 3000, 4000, 5000, 6000, or 7000. The same applies to thermal refining. It may be favorable to use materials subject to any type of treatment. For example, aluminum alloys may use materials subject to any type of treatment such as F, O, H, W, or T. Copper alloys may use materials subject to any type of treatment such as F, O, 1/4H, 1/2H, 3/4H, H, EH, or SH.

First Embodiment

As above, FIG. 1 is an exploded perspective view of the battery pack according to an embodiment of the present invention. The first embodiment describes an example of using a busbar illustrated in FIG. 2 as the busbar 10 illustrated in FIG. 1. The present embodiment places the negative-side third plate portion 205 on the positive-side third plate portion 105. As illustrated in FIG. 2, a specified region of the negative-side first plate portion 201 includes a thin portion 201b whose plate thickness is 0.6 mm. Hereinafter, unless otherwise specified, the similar region is provided with a thin portion whose plate thickness is 0.6 mm when the plate thickness of the negative-side first plate portion 201 exceeds 0.6 mm.

The thin portion 201b is formed by partially thinning the negative-side first plate portion 201. The negative-electrode plate 200 is secured to the negative-electrode terminal 2b. When the negative-side first plate portion 201 is laser welded to the principal terminal surface 2b1 of the negative-electrode terminal 2b, for example, the thin portion 201b can be easily melted to improve the efficiency of the welding work. The thin portion 201b can locally decrease the rigidity of the negative-side first plate portion 201 and can relax the stress acting on the busbar 10.

The positive-side first plate portion 101 and the negative-side first plate portion 201 include the holes 101a and 201a with a diameter of 3 mm at the locations illustrated in the drawing. The holes 101a and 201a are formed to penetrate the first plate portions 101 and 201. Hereinafter, unless otherwise specified, the 3-mm holes 101a and 201a are provided at the same locations in the drawings for comparison. The holes 101a and 201a can be used to position members such as busbars through the use of the recesses, for example.

The first plate portions 101 and 201 and the principal terminal surfaces 2a1 and 2b1 may be joined at locations other than the holes 101a and 201a. For example, the first plate portions 101 and 201 and the principal terminal surfaces 2a1 and 2b1 may be welded so that the overlapping regions are shaped into rectangles. In this case, it is favorable to form the welded region so that the length in the width direction perpendicular to the stacking direction of the unit battery 2 is longer than the length in the stacking direction thereof.

The description below explains the characteristics of the busbar 10 in FIG. 2 in terms of numeric values. The proportion (hereinafter region A) of the principal terminal surface 2a1 of the positive-electrode terminal 2a covered by the positive-side first plate portion 101 was 75.9%. The proportion (hereinafter region B) of the principal terminal surface 2b1 of the positive-electrode terminal 2b covered by the positive-side first plate portion 201 was also 75.9%.

FIG. 4 illustrates the specific positional relationship between the busbar and the terminals. FIG. 4(a) is an external perspective view, and FIG. 4(b) is a side view. As seen from FIGS. 4(a) and 4(b), the second plate portions 103 and 203 of the busbar 10 rise from the middle of the principal terminal surfaces 2a1 and 2b1 and the covered region is not 100% (not all the principal terminal surfaces 2a1 and 2b1 are covered). The end of the positive-side first plate portion 101 toward the positive-side second plate portion 103 is positioned to overlap the principal terminal surface 2a1 of the positive-electrode terminal 2a. The end of the negative-side first plate portion 201 toward the negative-side second plate portion 203 is positioned to overlap the principal terminal surface 2b1 of the negative-electrode terminal 2b.

As illustrated in FIG. 2, the distance (hereinafter distance H) between the principal terminal surfaces 2a1 and 2b1 and the top of the third plate portion 205 was 4.8 mm. The plate thickness (hereinafter plate thickness N) of the negative-side first plate portion 201 was 0.8 mm according to the present embodiment. The plate thickness (hereinafter plate thickness P) of the positive-side first plate portion 101 was 0.6 mm according to the present embodiment. A bend R of 0.4 is applied to the bent portions 102, 202, 104, and 204. The angle (hereinafter angle C) between the positive-side first plate portion 101 and the second plate portion 103 was 90°. The angle (hereinafter angle D) between the negative-side first plate portion 201 and the second plate portion 203 was 90°. The junction plane between the third plate portions 105 and 205 was almost parallel to the first plate portions 101 and 201 and indicated the angle (hereinafter angle E) of 0° therebetween. The junction area (hereinafter junction area S) between the third plate portions 105 and 205 was 59 mm2.

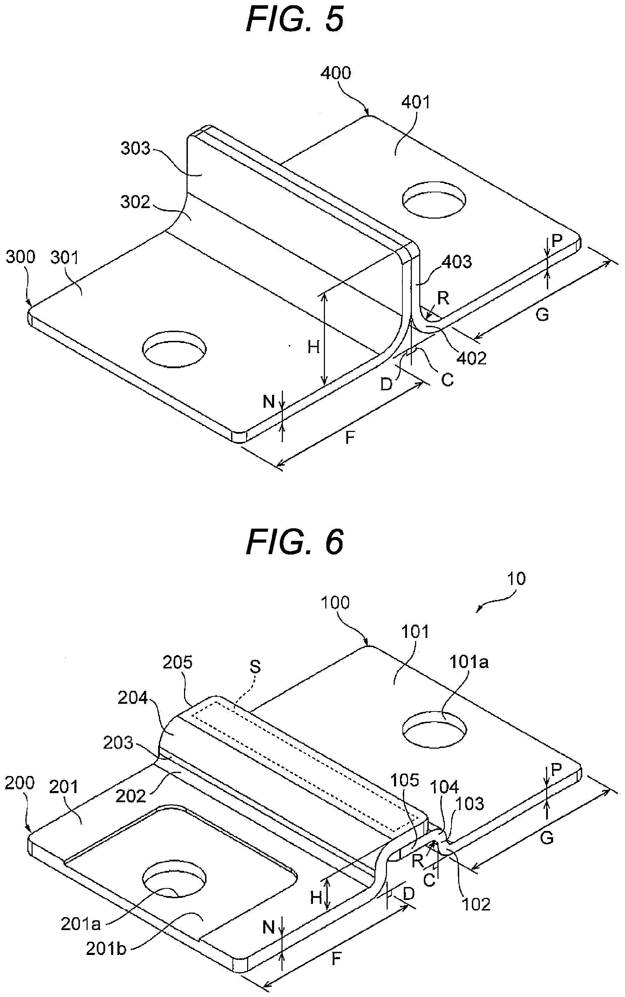

It was joined the third plate portions 105 and 205 on junction area S as the busbar 10 configured as above and then found the stress generated on the junction plane between the third plate portions 105 and 205 due to displacement Y0 applied in the Y direction illustrated in FIG. 3. The busbar 10 is loaded more severely in the Y direction than in the X and Z directions. An ultrasonic junction was used to join the third plate portions 105 and 205. It was applied the same displacement Y0 to the busbar configured according to the first comparative embodiment illustrated in FIG. 5 described below, compared stresses generated on the junction plane, and measured the percentage (hereinafter reduction rate X) of reduction in the stress compared to the stress generated in the first comparative embodiment. A decrease in reduction rate X is favorable and increases the effect of stress relaxation. As a result, the first embodiment showed a reduction rate X was 31.4%.

In addition, the present embodiment shows that the junction area is larger than that of the clad busbar using the junction mode described as an example in patent literature 2. The present embodiment can provide a larger junction area than that of the first comparative embodiment and favorably increase the junction robustness regardless of reduction rates. The total volume (hereinafter volume V) of the positive-side busbar material (positive-electrode plate 100) and the negative-side busbar material (negative-electrode plate 200) used in the present embodiment was 315 mm3. Unless otherwise specified, the volume of the busbar in each of the embodiment and the first comparative embodiment described above was estimated on the assumption of a constant distance (hereinafter a distance between unit terminals) between the terminals 2a and 2b of the adjacent unit batteries 2A and 2B in the battery module (battery pack 1).

The busbar 10 is favorably small in volume because of the reduction in material costs. The present embodiment favorably decreases the volume compared to the comparative embodiment while patent literature 2 describes a bypass busbar as a comparison. In this case, the busbar materials can be favorably saved regardless of the reduction rate X.

First Comparative Embodiment

FIG. 5 illustrates a busbar made of two types of plates according to the configuration described in patent literature 4 to show the advantages of the busbar according to the above-described embodiment. A busbar 300 includes a positive-electrode plate 400 made of an aluminum alloy and a negative-electrode plate 500 made of a copper alloy. The positive-electrode plate 400 includes a positive-side first plate portion 401 joined to the principal terminal surface 2a1 of the unit battery 2A and a positive-side raised portion 403 that is bent at the end of the positive-side first plate portion 401 and rises via a bent portion 402. The negative-electrode plate 500 includes a negative-side first plate portion 501 joined to the principal terminal surface 2b1 of the unit battery 2B and a negative-side raised portion 503 that is bent at the end of the negative-side first plate portion 501 and rises via a bent portion 502.

The positive-side raised portion 403 of the positive-electrode plate 400 and the negative-side raised portion 503 of the negative-electrode plate 500 are joined by ultrasonic junctions to overlap facing each other. The first comparative embodiment provides the junction plane perpendicular to the stacking direction of the unit battery 2. When the unit battery 2 expands and contracts, stress acts between the positive-side raised portion 403 and the negative-side raised portion 503 of the busbar 300 in the direction of peeling or compression.

The busbar 300 according to the first comparative embodiment is structured to join the positive-side raised portion 403 rising from the positive-side first plate portion 401 of the positive-electrode plate 400 and the negative-side raised portion 503 rising from the negative-side first plate portion 501 of the negative-electrode plate 500 to overlap each other. The rigidity is higher than the configuration of the first embodiment, possibly making elastic deformation difficult and applying large stress to a junction portion when displacement is applied due to expansion and contraction of the unit battery 2 itself or vibration during use.

The junction plane of the clad material is assumed to extend perpendicularly in the depth direction of the approximately solid plate in terms of the busbar 300 configured above according to the comparative embodiment. In the comparative embodiment, regions A and B where the first plate portions 401 and 501 are joined to the principal terminal surfaces 2a1 and 2b1 are 100% each. Height H from the upper surface of the first plate portions 401 and 501 to the end of the raised portions 403 and 503 in the rising direction is 4.8 mm. Plate thickness N of the positive-electrode plate 400 and plate thickness P of the negative-electrode plate 500 are 0.8 mm each. A Bend R of 1.5 mm is applied to the bent portions 402 and 502. Angle C between the first plate portion 401 and the raised portion 403 and angle D between the first plate portion 501 and the raised portion 503 are 90° each. However, the comparative embodiment excludes the positive-side third plate portion 105 and the negative-side third plate portion 205 according to the present embodiment. The comparative embodiment provides a junction area S of 50 mm2 between the raised portions 403 and 503. The reduction rate X is 100% because it is based on the stress in the comparative embodiment. The volume V was 264 mm3.

Second Embodiment

FIG. 6 illustrates an embodiment that changes the components of the busbar according to the first embodiment. According to the present embodiment, the lengths F and G of the first plate portions 101 and 201 are larger than those in the first embodiment to completely cover the principal terminal surfaces 2a1 and 2b1. Consequently, the junction area S is narrower than that in the first embodiment. Concerning the busbar 10 of the second embodiment, the regions A and B are 92.1% each, the distance H is 2.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 35 mm2. The reduction rate X was 91.1%. The volume V was 260 mm3.

Third Embodiment

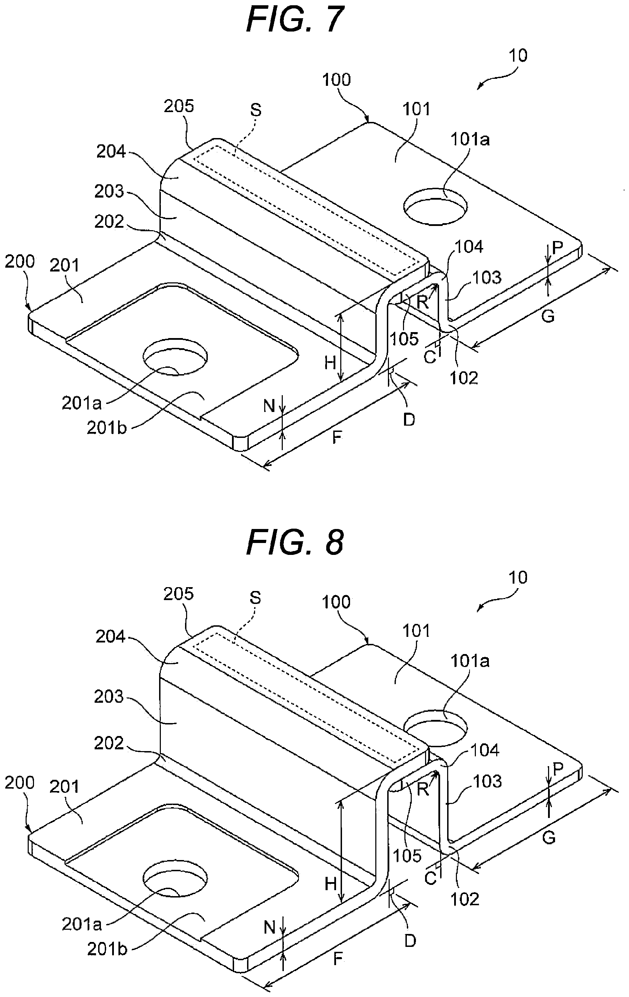

FIG. 7 illustrates an embodiment that changes the components of the busbar according to the first embodiment. The present embodiment increases the height of the second plate portions 103 and 203 as compared to the first embodiment. An increase in the height of the second plate portions 103 and 203 decreases the rigidity, making it possible to reduce shear stress acting between the first junction portion 105a and the second junction portion 205a corresponding to the same displacement as compared to the first embodiment. Concerning the busbar 10 of the third embodiment, the regions A and B are 92.1% each, the distance H is 4.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 35 mm2. The reduction rate X was 40.2%. The volume V was 300 mm3.

Fourth Embodiment

FIG. 8 illustrates an embodiment that changes the components of the busbar according to the first embodiment. The present embodiment increases the height of the second plate portions 103 and 203 as compared to the second embodiment. The rigidity decreases moreover, making it possible to further reduce shear stress acting between the first junction portion 105a and the second junction portion 205a corresponding to the same displacement as compared to the second embodiment. Concerning the busbar 10 of the fourth embodiment, the regions A and B are 92.1% each, the distance H is 6.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 35 mm2. The reduction rate X was 20.1%. The volume V was 340 mm3.

Fifth Embodiment

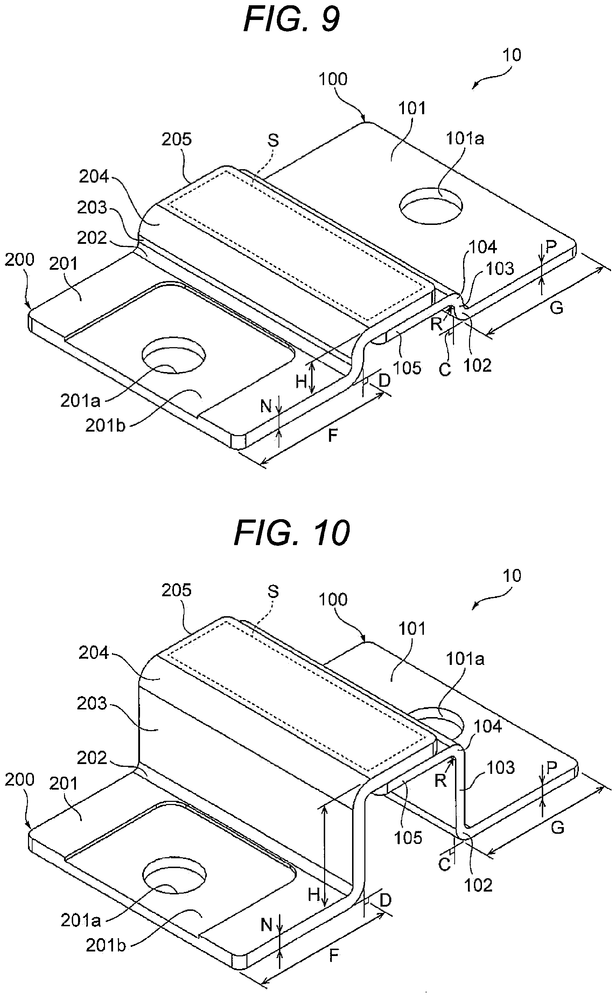

FIG. 9 illustrates an embodiment that changes the components of the busbar according to the first embodiment. The present embodiment decreases the height of the second plate portions 103 and 203 as compared to the first embodiment. It is possible to decrease the overall height of the busbar 10 and miniaturize the battery pack 1. Concerning the busbar 10 of the fifth embodiment, the regions A and B are 75.9% each, the distance H is 2.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 59 mm2. The reduction rate X was 86.7%. The volume V was 275 mm3.

Sixth Embodiment

FIG. 10 illustrates an embodiment that changes the components of the busbar according to the first embodiment. The present embodiment increases the height of the second plate portions 103 and 203 as compared to the first embodiment. An increase in the height of the second plate portions 103 and 203 decreases the rigidity, making it possible to reduce shear stress acting between the first junction portion 105a and the second junction portion 205a corresponding to the same displacement as compared to the first embodiment. Concerning the busbar 10 of the sixth embodiment, the regions A and B are 75.9% each, the distance H is 6.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 59 mm2. The reduction rate X was 14.4%. The volume V was 355 mm3.

Seventh Embodiment

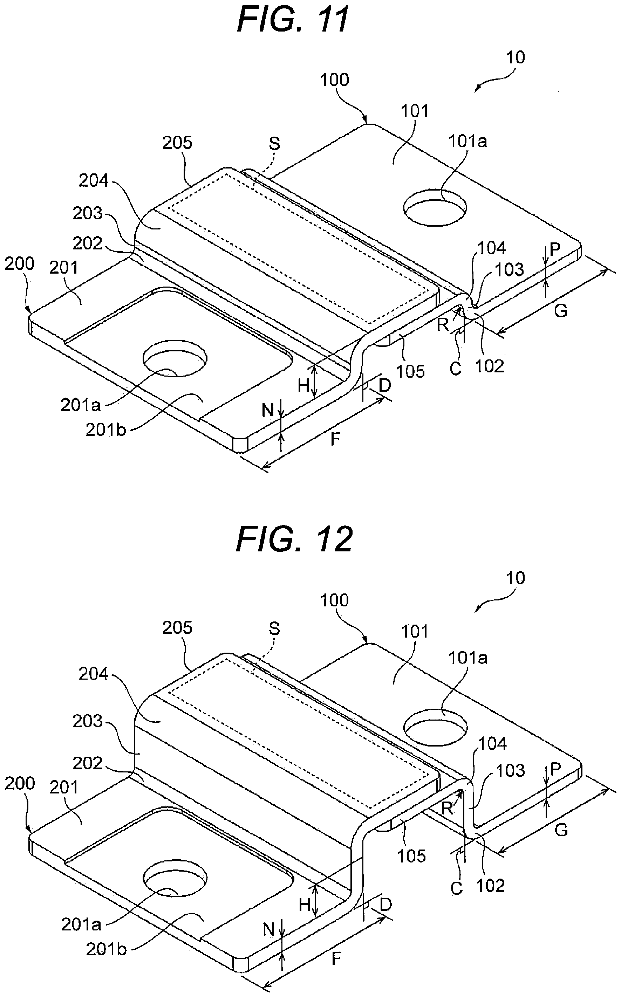

FIG. 11 illustrates an embodiment that changes the components of the busbar according to the first embodiment. According to the present embodiment, the lengths F and G of the first plate portions 101 and 201 are smaller than those in the first embodiment to partially cover the principal terminal surfaces 2a1 and 2b1. Consequently, the junction area S is wider than that in the first embodiment. Concerning the busbar 10 of the seventh embodiment, the regions A and B are 72.4% each, the distance H is 2.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 66 mm2. The reduction rate X was 87.2%. The volume V was 275 mm3.

Eighth Embodiment

FIG. 12 illustrates an embodiment that changes the components of the busbar according to the seventh embodiment. The present embodiment increases the height of the second plate portions 103 and 203 as compared to the seventh embodiment. The rigidity decreases moreover, making it possible to further reduce shear stress acting between the first junction portion 105a and the second junction portion 205a corresponding to the same displacement as compared to the seventh embodiment. Concerning the busbar 10 of the eighth embodiment, the regions A and B are 72.4% each, the distance H is 4.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 66 mm2. The reduction rate X was 31.2%. The volume V was 316 mm3.

Ninth Embodiment

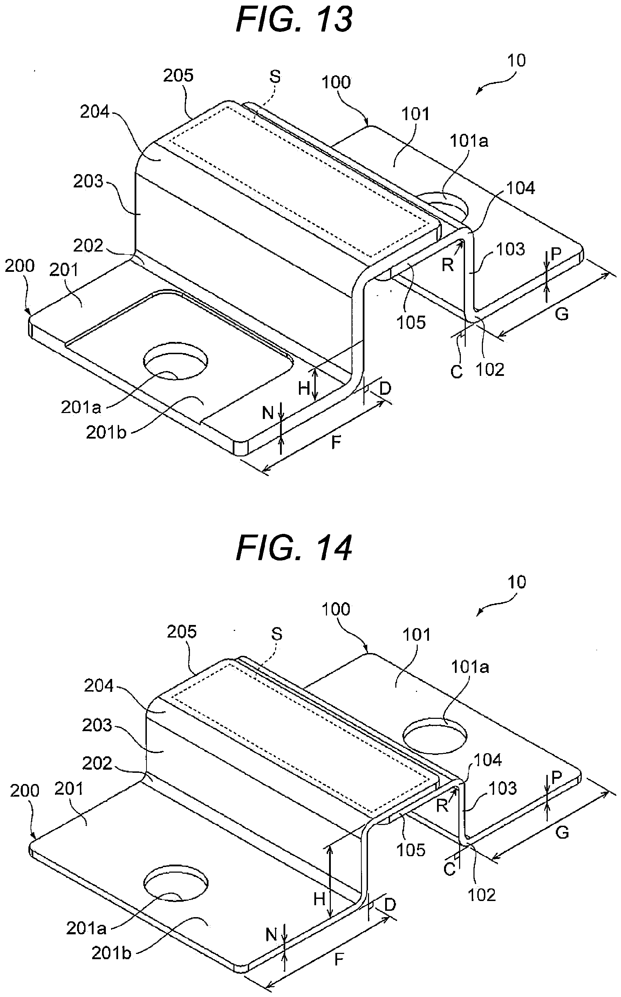

FIG. 13 illustrates an embodiment that changes the components of the busbar according to the first embodiment. The present embodiment moreover increases the height of the second plate portions 103 and 203 as compared to the eighth embodiment. The rigidity decreases moreover, making it possible to further reduce shear stress acting between the first junction portion 105a and the second junction portion 205a corresponding to the same displacement as compared to the eighth embodiment. Concerning the busbar 10 of the ninth embodiment, the regions A and B are 72.4% each, the distance H is 6.8 mm, the plate thickness N is 0.8 mm, and the plate thickness P is 0.6 mm. The bend R is 0.4 mm. The angles C and D are 90° each, and the angle E is 0°. The present embodiment can increase the junction area S up to 66 mm2. The reduction rate X was 14.3%. The volume V was 356 mm3.

Tenth Embodiment

FIG. 14 illustrates an embodiment that changes the components of the busbar according to the first embodiment. The present embodiment uses the same plate thickness for the positive-electrode plate 100 and the negative-electrode plate 200 to be thinner than that of the first embodiment. The thin portion 201b of the negative-electrode plate 200 is omitted. Concerning the busbar 10 according to the present embodiment, the regions A and B are 75.9% each, the distance H is 4.8 mm, the plate thickness N is 0.4 mm, and the plate thickness P is 0.4 mm. The bend R is 0.4 mm. The angles C and D are 90° each, and the angle E is 0°. The present embodiment showed that the junction area S is 59 mm2. The reduction rate X was 6.9%. The volume V was 193 mm3.

Eleventh Embodiment

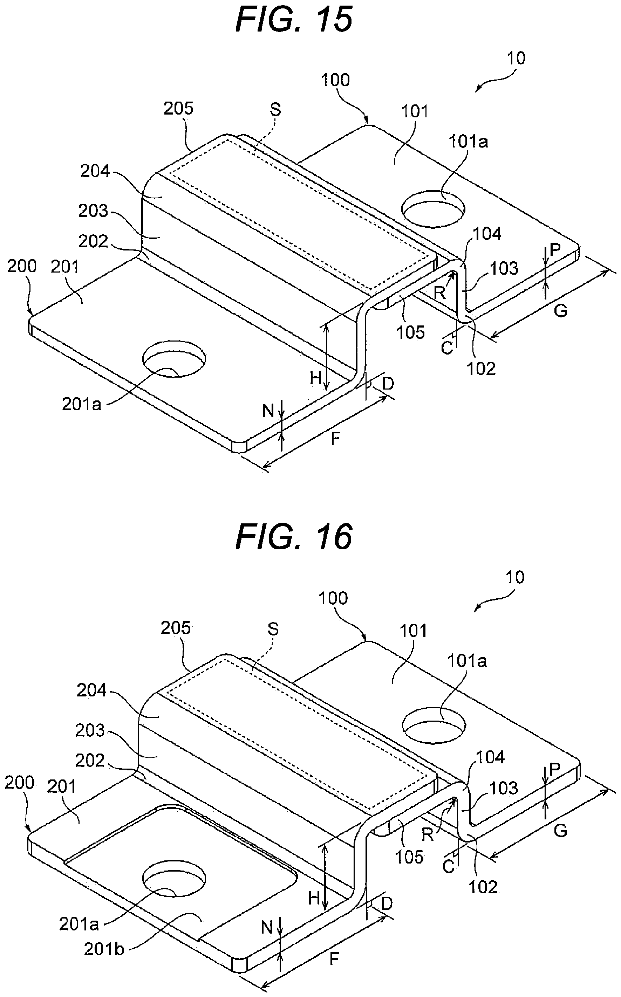

FIG. 15 illustrates an embodiment that changes the components of the busbar according to the first embodiment. The present embodiment uses the same plate thickness for the positive-electrode plate 100 and the negative-electrode plate 200 to be thicker than that of the tenth embodiment. The thin portion 201b of the negative-electrode plate 200 is omitted. Concerning the busbar 10 according to the present embodiment, the regions A and B are 75.9% each, the distance H is 4.8 mm, the plate thickness N is 0.6 mm, and the plate thickness P is 0.6 mm. The bend R is 0.4 mm. The angles C and D are 90° each, and the angle E is 0°. The present embodiment showed that the junction area S is 59 mm2. The reduction rate X was 22.1%. The volume V was 283 mm3.

Twelfth Embodiment

FIG. 16 illustrates an embodiment that changes the components of the busbar according to the first embodiment. The present embodiment uses the same plate thickness for the positive-electrode plate 100 and the negative-electrode plate 200 to be thicker than that of the eleventh embodiment. Concerning the busbar 10 according to the present embodiment, the regions A and B are 75.9% each, the distance H is 4.8 mm, the plate thickness N is 0.8 mm, and the plate thickness P is 0.8 mm. The bend R is 0.4 mm. The angles C and D are 90° each, and the angle E is 0°. The present embodiment showed that the junction area S is 59 mm2. The reduction rate X was 44.7%. The volume V was 357 mm3.

Thirteenth Embodiment

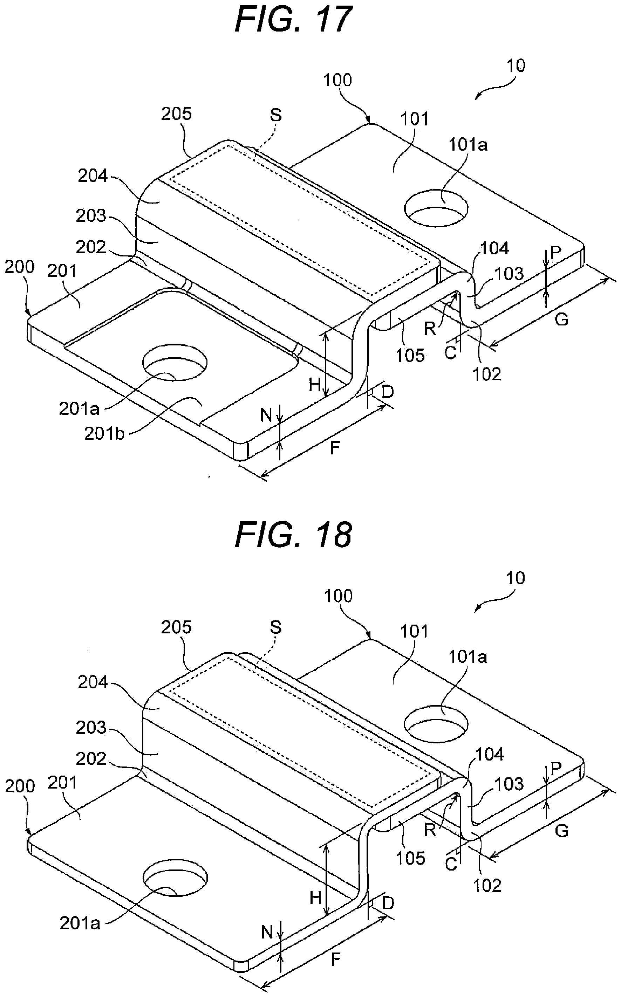

FIG. 17 illustrates an embodiment that changes the components of the busbar according to the first embodiment. The present embodiment uses the same plate thickness for the positive-electrode plate 100 and the negative-electrode plate 200 to be thicker than that of the twelfth embodiment. Concerning the busbar 10 according to the present embodiment, the regions A and B are 75.9% each, the distance H is 4.8 mm, the plate thickness N is 1.0 mm, and the plate thickness P is 1.0 mm. The bend R is 0.4 mm. The angles C and D are 90° each, and the angle E is 0°. The present embodiment showed that the junction area S is 59 mm2. The reduction rate X was 75.0%. The volume V was 439 mm3.

Fourteenth Embodiment

FIG. 18 illustrates an embodiment that changes the components of the busbar according to the first embodiment. According to the present embodiment, the plate thickness of the positive-electrode plate 100 is larger than the plate thickness of the negative-electrode plate 200. Concerning the busbar 10 according to the present embodiment, the regions A and B are 75.9% each, the distance H is 4.8 mm, the plate thickness N is 0.6 mm, and the plate thickness P is 0.8 mm. The bend R is 0.4 mm. The angles C and D are 90° each, and the angle E is 0°. The present embodiment showed that the junction area S is 59 mm2. The reduction rate X was 32.0%. The volume V was 326 mm3.

Fifteenth Embodiment

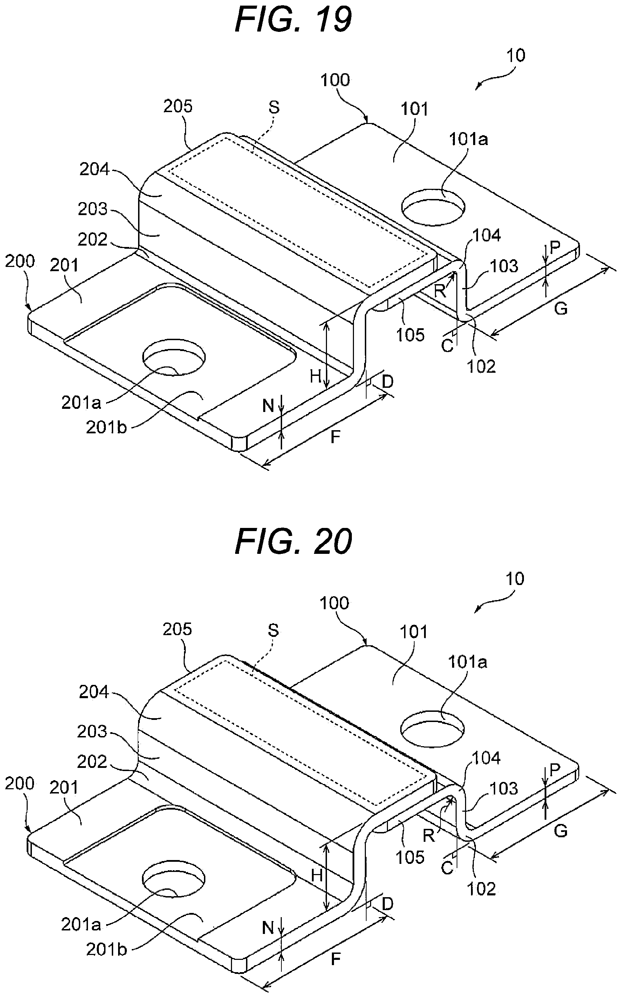

FIG. 19 illustrates an embodiment that changes the components of the busbar according to the first embodiment. The bend R according to the present embodiment is smaller than that of the first embodiment. Concerning the busbar 10 according to the present embodiment, the regions A and B are 75.9% each, the distance H is 4.8 mm, the plate thickness N is 0.8 mm, and the plate thickness P is 0.6 mm. The bend R is 0.3 mm. The angles C and D are 90° each, and the angle E is 0°. The present embodiment showed that the junction area S is 59 mm2. The reduction rate X was 30.8%. The volume V was 317 mm3.

Sixteenth Embodiment

FIG. 20 illustrates an embodiment that changes the components of the busbar according to the first embodiment. The bend R according to the present embodiment is larger than that of the first embodiment. Concerning the busbar 10 according to the present embodiment, the regions A and B are 75.9% each, the distance H is 4.8 mm, the plate thickness N is 0.8 mm, and the plate thickness P is 0.6 mm. The bend R is 0.7 mm. The angles C and D are 90° each, and the angle E is 0°. The present embodiment showed that the junction area S is 59 mm2. The reduction rate X was 33.5%. The volume V was 310 mm3.

Seventeenth Embodiment

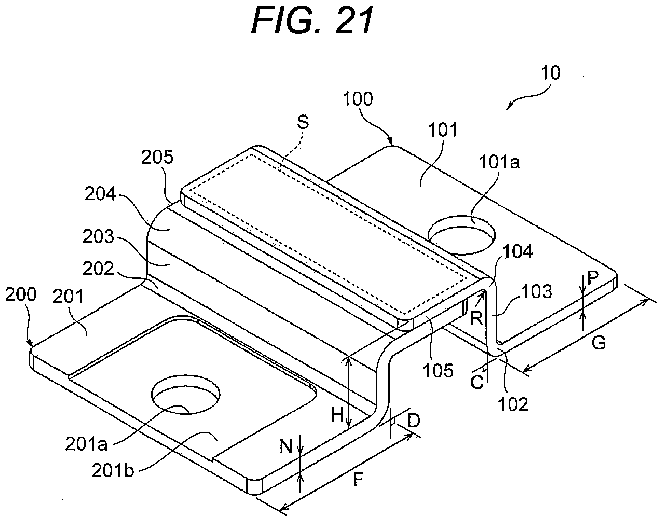

FIG. 21 illustrates an embodiment that changes the components of the busbar according to the first embodiment. The present embodiment places the positive-side third plate portion above the negative-side third plate portion. According to the present embodiment, the regions A and B are 75.9% each, the distance H is 4.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 59 mm2. The reduction rate X was 30.5%. The volume V was 315 mm3.

Eighteenth Embodiment

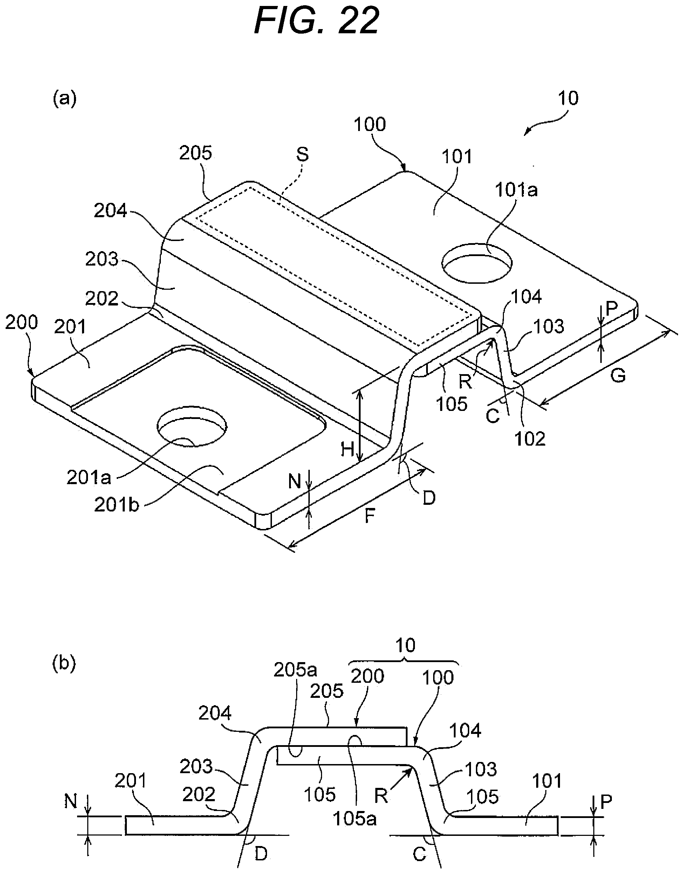

FIG. 22 illustrates an embodiment that changes the components of the busbar according to the first embodiment. FIG. 22(a) is an external perspective view, and FIG. 22(b) is a side view. The busbar 10 according to the present embodiment is formed so that the second plate portions 103 and 203 slantwise rise from the first plate portions 101 and 201, respectively. The positive-side second plate portion 103 is slantwise formed against the positive-side first plate portion 101 in a direction to approach the negative-electrode terminal 2b along the stacking direction of the unit battery 2 corresponding to the direction of rising from the positive-side first plate portion 101. The negative-side second plate portion 203 is slantwise formed against the negative-side first plate portion 201 in a direction to approach the positive-electrode terminal 2a along the stacking direction of the unit battery 2 corresponding to the direction of rising from the negative-side first plate portion 201. The present embodiment uses the bending angle of 100° for the bent portions 104 and 204.

The busbar 10 according to the present embodiment can relax stress in a tensile direction because the rigidity in the tensile direction to separate the positive-side first plate portion 101 and the negative-side first plate portion 201 from each other is lower than the rigidity in the compressive direction to bring these closer together. Concerning the busbar 10 according to the present embodiment, the regions A and B are 75.9% each, the distance H is 4.8 mm, the plate thickness N is 0.8 mm, and the plate thickness P is 0.6 mm. The bend R is 0.4 mm. The angles C and D are 100° each, and the angle E is 0°. The present embodiment showed that the junction area S is 59 mm2. The reduction rate X was 35.7%. The volume V was 307 mm3.

Nineteenth Embodiment

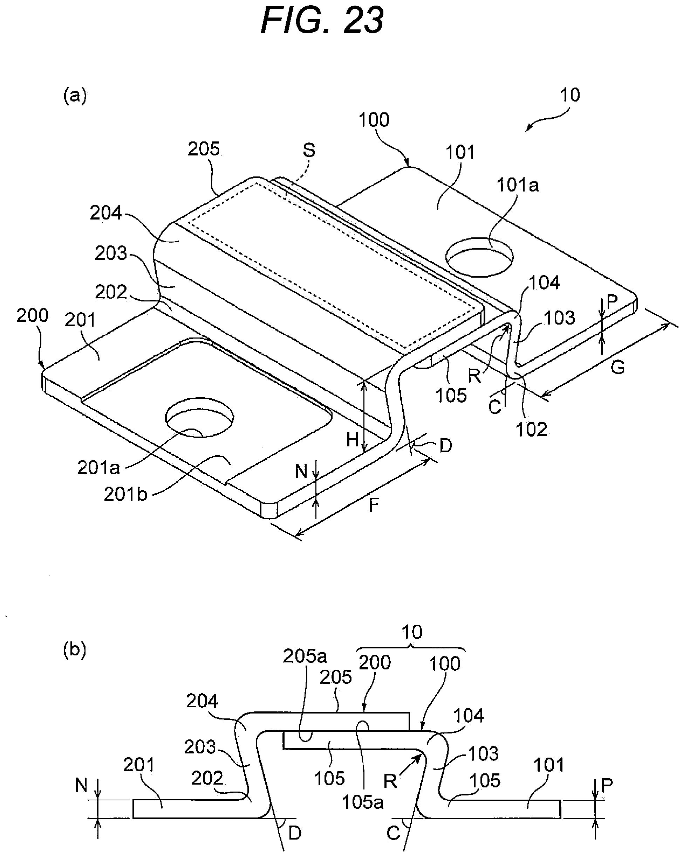

FIG. 23 illustrates an embodiment that changes the components of the busbar according to the first embodiment. FIG. 23(a) is an external perspective view, and FIG. 23(b) is a side view. The busbar 10 according to the present embodiment is formed so that the second plate portions 103 and 203 slantwise rise from the first plate portions 101 and 201, respectively. The positive-side second plate portion 103 is slantwise formed against the positive-side first plate portion 101 in a direction to depart from the negative-electrode terminal 2b along the stacking direction of the unit battery 2 corresponding to the direction of rising from the positive-side first plate portion 101. The negative-side second plate portion 203 is slantwise formed against the negative-side first plate portion 201 in a direction to depart from the positive-electrode terminal 2a along the stacking direction of the unit battery 2 corresponding to the direction of rising from the negative-side first plate portion 201. The present embodiment uses the bending angle of 80° for the bent portions 104 and 204.

The busbar 10 according to the present embodiment can relax compressive stress because the rigidity in the compression direction to bring the positive-side first plate portion 101 and the negative-side first plate portion 201 closer together is lower than the rigidity in the tensile direction to separate them from each other. Concerning the busbar 10 according to the present embodiment, the regions A and B are 75.9% each, the distance H is 4.8 mm, the plate thickness N is 0.8 mm, and the plate thickness P is 0.6 mm. The bend R is 0.4 mm. The angles C and D are 80° each, and the angle E is 0°. The present embodiment showed that the junction area S is 59 mm2. The reduction rate X was 27.7%. The volume V was 323 mm3.

Twentieth Embodiment

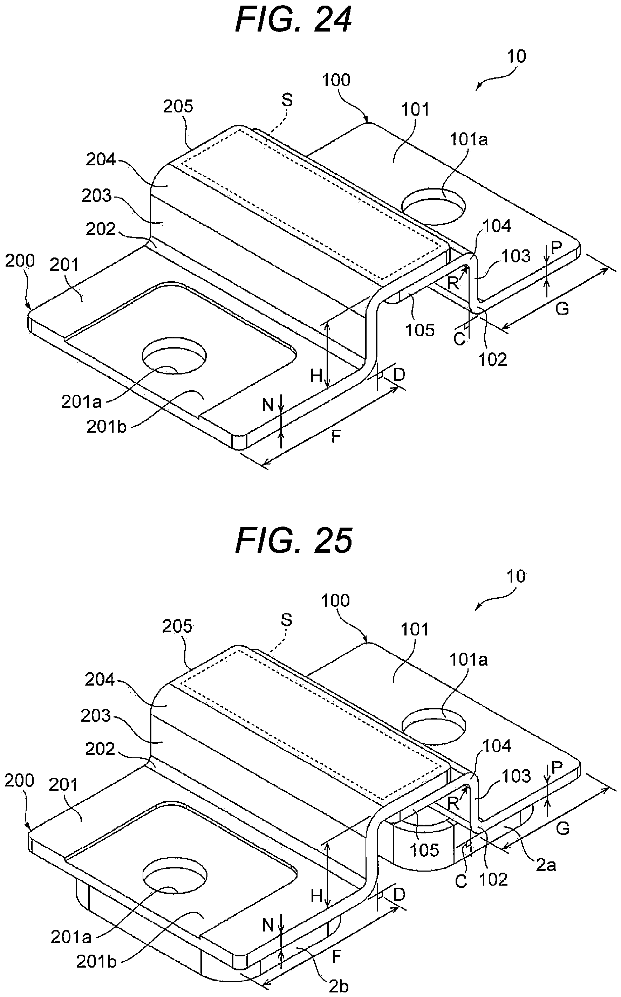

FIG. 24 illustrates an embodiment that changes the components of the busbar according to the first embodiment. According to the present embodiment, the region A is 86.5% and the region B is 68.8%. According to the present embodiment, the length F of the positive-side first plate portion 101 is shorter than the length G of the negative-side first plate portion 201 so that the positive-side first plate portion 101 is large enough to partially cover the principal terminal surface 2a1. FIG. 25 illustrates the detailed positional relationship with the terminals. Concerning the busbar 10 according to the present embodiment, the distance H is 4.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 59 mm2. The reduction rate X was 26.2%. The volume V was 287 mm3.

Twenty-first Embodiment

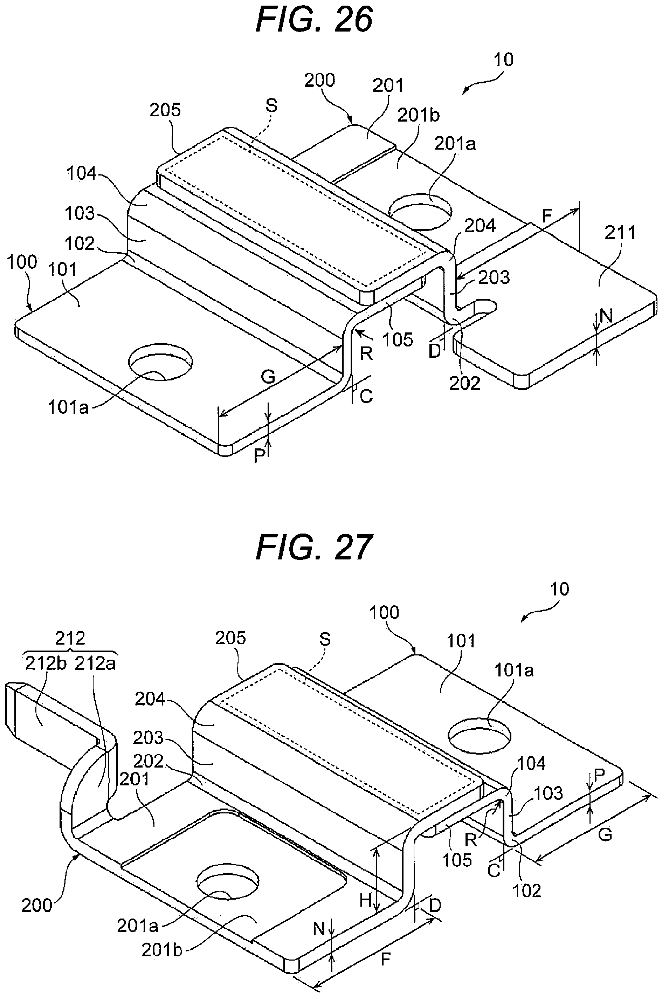

FIG. 26 illustrates an embodiment that changes the components of the busbar according to the first embodiment.

As illustrated in FIG. 26, the present embodiment forms an extension portion 211 at one end of the negative-side first plate portion 201 in the width direction to provide a region to attach a voltage detection wire that detects the voltage of the unit battery 2. The rest of the configuration is similar to the first embodiment. The extension portion 211 is integrally formed with the negative-side first plate portion 201 to protrude from the side of the negative-side first plate portion 201 in the width direction. According to the present embodiment, the regions A and B are 75.9% each, the distance H is 4.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 59 mm2. The reduction rate X was 31.5%. The volume V was 356 mm3.

Twenty-second Embodiment

FIG. 27 illustrates an embodiment that changes the components of the busbar according to the first embodiment.

As illustrated in FIG. 27, the present embodiment forms an extension portion 212 out of the negative-side first plate portion 201 in the direction perpendicular to the positive terminal direction to provide a region to attach a voltage detection line. The rest of the configuration is similar to the first embodiment. The extension portion 212 includes a raised portion 212a bent and raised on the side of the negative-side first plate portion 201 and is formed to be bent at the end of the raised portion 212a toward the negative-side second plate portion 203 and protrude laterally from the negative-side first plate portion 201. According to the present embodiment, the regions A and B are 75.9% each, the distance H is 4.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 59 mm2. The reduction rate X was 31.3%. The volume V was 341 mm3.

Twenty-third Embodiment

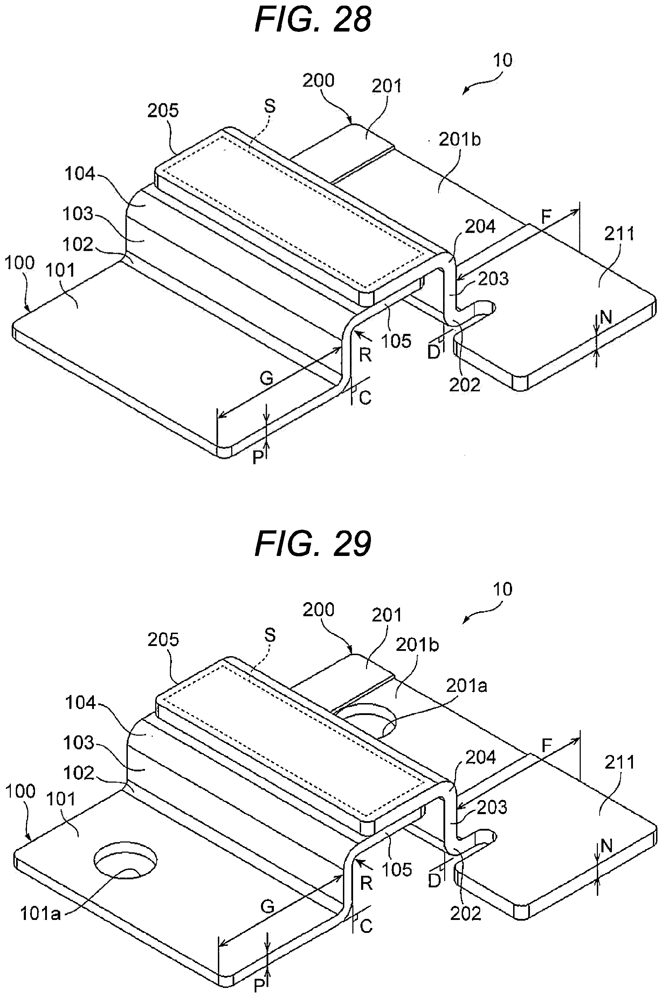

FIG. 28 illustrates an embodiment that changes the components of the busbar according to the first embodiment.

As illustrated in FIG. 28, the present embodiment forms an extension portion 211 out of the negative-side first plate portion 201 in the direction perpendicular to the positive terminal direction to provide a region to attach a voltage detection line. Each of the above-described embodiments omits the holes 101a and 201a with a diameter of 3 mm provided in the first plate portions 101 and 201, respectively. The rest of the configuration is similar to the first embodiment. According to the present embodiment, the regions A and B are 75.9% each, the distance H is 4.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 59 mm2. The reduction rate X was 31.8%. The volume V was 365 mm3.

Twenty-fourth Embodiment

FIG. 29 illustrates an embodiment that changes the components of the busbar according to the first embodiment.

As illustrated in FIG. 29, the present embodiment forms an extension portion 211 out of the negative-side first plate portion 201 in the direction perpendicular to the positive terminal direction to provide a region to attach a voltage detection line. According to each of the above-described embodiments, the holes 101a and 201a with a diameter of 3 mm provided in the first plate portions 101 and 201, respectively, are positioned away from the extension portion 211, namely, the region to attach the voltage detection line.

Suppose W denotes the busbar length out of the length of the negative-side first plate portion 201 in the direction perpendicular to the positive-electrode terminal direction except for the extension portion. The present embodiment provides the center of the hole W/3.5 distant from the end opposite the extension portion 211. The hole in the positive-side first plate portion 101 is also positioned W/3.5 distant from the end opposite the extension portion 211.

The holes may be provided at positions close to or distant from the extension portion 211. The holes can be provided at positions that do not affect the physical and electrical connection between the busbar 10 and the terminal. It is favorable to position the terminal surface below the hole. This can prevent a foreign object, if any, from dropping from above the holes 101a, 201a through the hole to a position below the upper surface of the terminal.

In consideration of the above, it is favorable to position the center of the hole larger than W/6 and smaller than W/1.2 distant from the end opposite the extension portion 211. More favorably, the distance is larger than W/5 and smaller than W/1.3. More favorably, the distance is larger than W/4 and smaller than W/1.4.

For the same reason, it is favorable to position the center of the hole 101a in the positive-side first plate portion 101 to satisfy the distance from the negative-side second plate portion to be larger than G/6 and smaller than G/1.2. More favorably, the distance is larger than G/5 and smaller than G/1.3. More favorably, the distance is larger than G/4 and smaller than G/1.4.

For the same reason, it is favorable to position the center of the hole 201a in the negative-side first plate portion 201 to satisfy the distance from the positive-side second plate portion to be larger than F/6 and smaller than F/1.2. More favorably, the distance is larger than F/5 and smaller than F/1.3. More favorably, the distance is larger than F/4 and smaller than F/1.4.

The rest of the configuration is similar to the first embodiment. According to the present embodiment, the regions A and B are 75.9% each, the distance H is 4.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 59 mm2. The reduction rate X was 20.0%. The volume V was 356 mm3.

Suppose W denotes the length of the negative-electrode plate 200 in the width direction excluding the extension portion 211, namely, the length of the negative-side first plate portion 201 in the width direction. The present embodiment provides the center of the hole 201a in the negative-side first plate portion 201 at the position corresponding to 1/3.5 of length W (W/3.5) distant from the end opposite the extension portion 211. Suppose W denotes the widthwise length of the negative-side first plate portion 201 from the end (the end opposite the widthwise direction) opposite the side where the extension portion 211 exists. Then, the center position of the hole 101a of the positive-side first plate portion 101 is proved at the position corresponding to 1/3.5 of length W (W/3.5).

The holes 201a and 101a may be provided at positions close to or distant from the extension portion 211. The holes 201a and 101a can be provided at positions that do not affect the physical and electrical connection between the busbar 10 and the terminal.

It is favorable to position the principal terminal surfaces 2a1 and 2b1 below the holes 201a and 101a. This can prevent a foreign object if any, from dropping from above the holes 201a, 101a through the holes 201a, 101a to a position below the principal terminal surfaces 2a1, 2b1.

In consideration of the above, it is favorable to position the center of the hole 201a in the negative-side first plate portion 201 to satisfy the distance from the end opposite the extension portion 211 to be larger than 1/6 of length W (W/6) and smaller than 1/1.2 of length W (W/1.2). More favorably, the distance is larger than 1/5 of length W (W/5) and smaller than 1/1.3 of length W (W/1.3). More favorably, the distance is larger than 1/4 of length W (W/4) and smaller than 1/1.4 of length W (W/1.4).

For the same reason, it is favorable to position the center of the hole 101a in the positive-side first plate portion 101 to satisfy the distance from the negative-side second plate portion 203 to be larger than 1/6 of G (G/6) and smaller than 1/1.2 of G (G/1.2), G denoting the length of the positive-side first plate portion 101. More favorably, the distance is larger than 1/5 of G (G/5) and smaller than 1/1.3 of G (G/1.3), G denoting the length of the positive-side first plate portion 101. Much more favorably, the distance is larger than 1/4 of length G (G/4) and smaller than 1/1.4 of length G (G/1.4).

For the same reason, it is favorable to position the center of the hole 201a in the negative-side first plate portion 201 to satisfy the distance from the positive-side second plate portion 103 to be larger than 1/6 of F (F/6) and smaller than 1/1.2 of F (F/1.2), F denoting the length of the negative-side first plate portion 201. More favorably, the distance is larger than 1/5 of F (F/5) and smaller than 1/1.3 of F (F/1.3). More favorably, the distance is larger than 1/4 of F (F/4) and smaller than 1/1.4 of F (F/1.4), G denoting the length of the negative-side first plate portion 201.

Twenty-fifth Embodiment

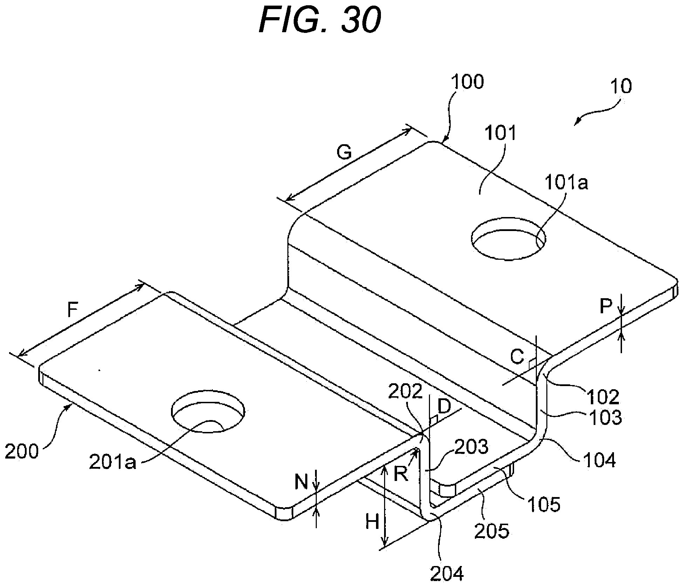

FIG. 30 illustrates an embodiment that changes the components of the busbar according to the first embodiment.

As illustrated in FIG. 30, the present embodiment keeps the shape of the busbar 10 equal to that of the eleventh embodiment but flips it vertically to be placed on the terminal surface so that the busbar, used in the above-described first through twenty-fourth embodiments, allows the first plate portion surface in contact with the principal terminal surface faces upward.

According to the present embodiment, the first tip portion 100b of the positive-electrode plate 100 includes a positive-side second plate portion 103 as a first raised portion that is bent and rises at the end of the first base end portion 100a; and a positive-side third plate portion 105 which is bent at the end in the rising direction of the positive-side second plate portion 103, extends toward the negative-electrode terminal 2b of the other unit battery 2B, and is joined to the second tip portion 200b of the negative-electrode plate 200 to overlap with each other. The positive-side second plate portion 103 is bent at the end of the positive-side first plate portion 101 toward the negative-electrode terminal 2b and rises in a direction intersecting the stacking direction and approaching the unit battery 2, namely, rises perpendicular to the positive-side first plate portion 101 according to the present embodiment.

The second tip portion 200b of the negative-electrode plate 200 includes a negative-side second plate portion 203 as a second raised portion that is bent and rises at the end of the second base end portion 200a; and a negative-side third plate portion 205 which is bent at the end in the rising direction of the negative-side second plate portion 203, extends toward the positive-electrode terminal 2a of the other unit battery 2A, and is joined to the first tip portion 100b of the positive-electrode plate 200 to overlap with each other. The negative-side second plate portion 203 is bent at the end of the negative-side first plate portion 201 toward the positive-electrode terminal 2a and rises in a direction intersecting the stacking direction and approaching the unit battery 2, namely, rises perpendicular to the negative-side first plate portion 201 according to the present embodiment.

The positive-side third plate portion 105 and the negative-side third plate portion 205 are overlapped and joined to each other in a direction perpendicular to the stacking direction of the unit battery 2. In addition to the effects of each of the above-described embodiments, the present embodiment can decrease the amount of protrusion upward from the principal terminal surfaces 2a1 and 2b1 and reduce the overall size of the battery pack 1.

According to the present embodiment, the regions A and B are 82.4% each, the distance H is 4.8 mm, the plate thickness N is 0.6 mm, and the plate thickness P is 0.6 mm. The bend R is 0.4 mm. The angles C and D are 90° each, and the angle E is 0°. The present embodiment showed that the junction area S is 59 mm2. The reduction rate X was 22.1%. The volume V was 283 mm3.

Twenty-sixth Embodiment

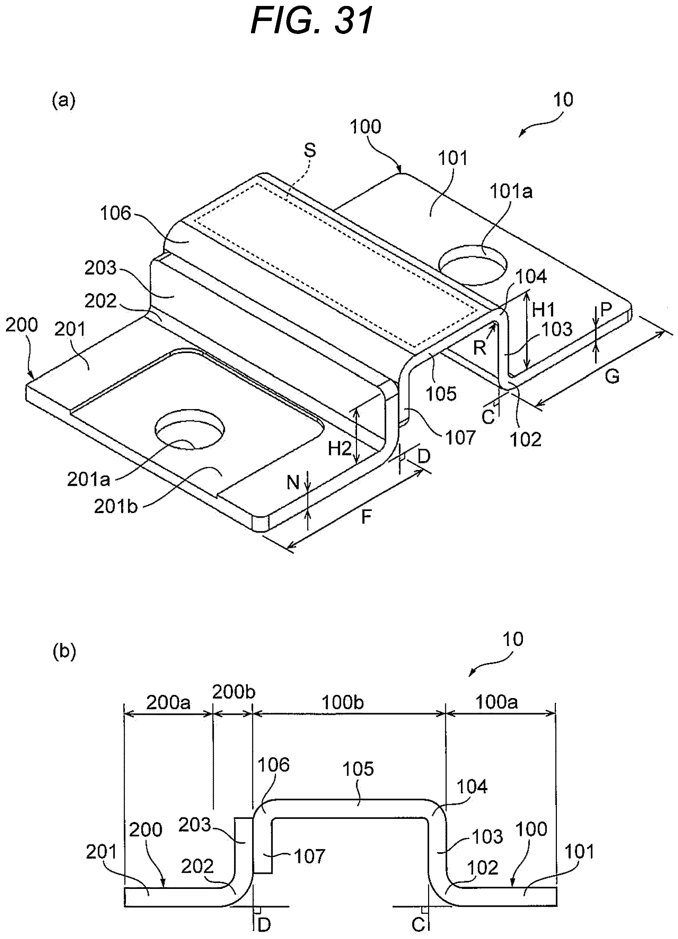

FIG. 31 illustrates an embodiment that changes the components of the busbar according to the first embodiment. According to the present embodiment, the positive-electrode plate 100 includes a fourth plate portion 107 in addition to the first plate portion 101, the second plate portion 103, and the third plate portion 105. The fourth plate portion 107 and the third plate portion 105 together form the first junction portion. The fourth plate portion 107 is configured as a falling portion that is bent at the end of the third plate portion 105 configured as an extension portion in the extending direction and falls from the third plate portion 105 in a direction to approach the upper surface of the unit battery 2 via a bent portion 106. The fourth plate portion 107 is provided to extend in a direction perpendicular to the stacking direction of the unit battery 2. The negative-electrode plate 200 includes a negative-side first plate portion 201 and a negative-side second plate portion 203, but unlike the other embodiments described above, excludes the negative-side third plate portion 205.

In terms of the positive-electrode plate 100, the first base end portion 100a includes the positive-side first plate portion 101. The first tip portion 100b includes the positive-side second plate portion 103, the bent portion 104, the positive-side third plate portion 105, the bent portion 106, and the positive-side fourth plate portion 107. In terms of the negative-electrode plate 200, the second base end portion 200a includes the negative-side first plate portion 201. The second tip portion 200b includes the negative-side second plate portion 203.

The positive-electrode plate 100 and the negative-electrode plate 200 are joined so that the fourth plate portion 107 of the positive-electrode plate 100 and the second plate portion 203 of the negative-electrode plate 200 face each other in the stacking direction of the unit battery to form a junction portion therebetween. The junction portion is welded by laser welding, for example. The present embodiment keeps the busbar shape unchanged and extends the tip of the positive-electrode plate 100 and shortens the negative-electrode plate 200 to move the location of the junction plane. The fourth plate portion 107 of the positive-electrode plate 100 and the second plate portion 203 of the negative-electrode plate 200 are joined in the same direction as the stacking direction of the unit battery 2. This configuration was used to verify whether it is possible to relax stress on the junction plane between the fourth plate portion 107 of the positive-electrode plate 100 and the second plate portion 203 of the negative-electrode plate 200. The rest of the configuration is similar to the first embodiment. According to the present embodiment, the regions A and B are 75.9% each, the distance H is 4.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 37 mm2. The reduction rate X was 26.2%. The volume V was 287 mm3.

According to the configuration of the present embodiment, the junction portion between the fourth plate portion 107 of the positive-electrode plate 100 and the second plate portion 203 of the negative-electrode plate 200 extends in a direction perpendicular to the stacking direction of the unit batteries 2. Therefore, the expansion and contraction of the multiple unit batteries 2 may apply stress to the junction portion in a peeling direction. However, in the busbar 10 of the present embodiment, the positive-electrode plate 100 includes the second plate portion 103 and the third plate portion 105. The second plate portion 103 and the third plate portion 105 are elastically deformed to be able to relax the stress.

Twenty-seventh Embodiment

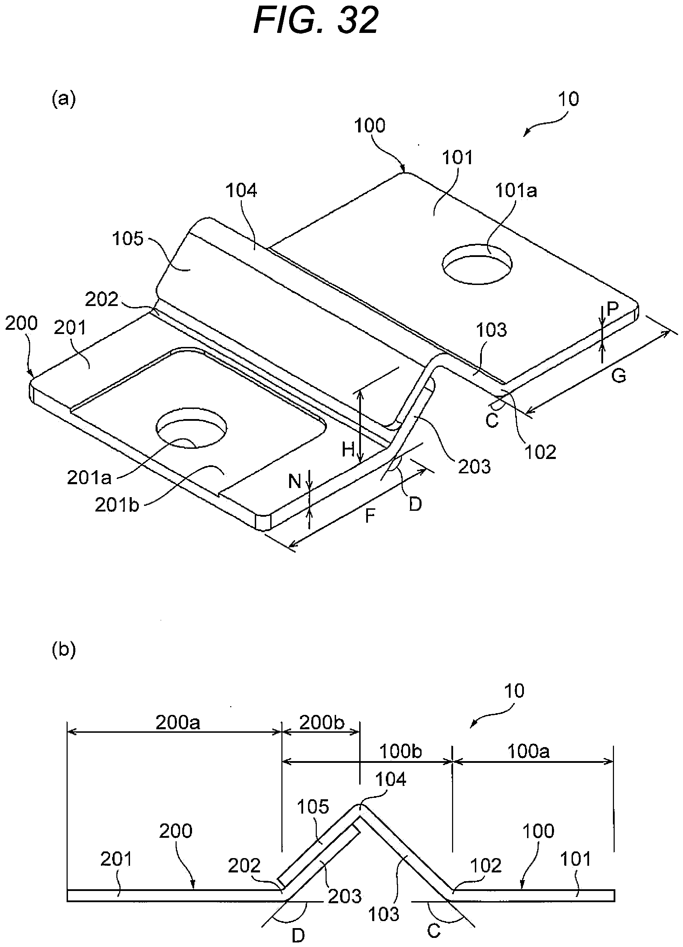

FIG. 32 illustrates an embodiment that changes the components of the busbar according to the first embodiment.

According to the present embodiment, the positive-electrode plate 100 includes the first plate portion 101, the second plate portion 103, and the third plate portion 105. The second plate portion 103 is a first raised portion that rises obliquely from the end of the first plate portion 101 toward the negative-electrode terminal 2b. The third plate portion 105 is a first falling portion that falls obliquely from the end of the second plate portion 103 toward the negative-electrode terminal 2b.

The second plate portion 103 gradually rises from the bent portion 102 to approach the negative-electrode terminal 2b of the unit battery 2B from the unit battery 2A in the stacking direction of the unit battery 2. The first tip portion 100b gradually falls from the bent portion 104 to approach the negative-electrode terminal 2b of unit battery 2B from the unit battery 2A in the stacking direction of the unit battery 2.

The negative-electrode plate 200 includes the first plate portion 201 and the second plate portion 203, but unlike the other embodiments described above, excludes the negative-side third plate portion 205. The second plate portion 203 of the negative-electrode plate 200 is a second raised portion that rises obliquely from the end of the negative-side first plate portion 201 toward the positive-electrode terminal 2a. The second plate portion 203 gradually rises from the bent portion 202 along the stacking direction of the unit battery 2 in the direction to approach the positive-electrode terminal 2a of unit battery 2A from the unit battery 2B.

The positive-electrode plate 100 and the negative-electrode plate 200 are joined to form a junction portion therebetween so that the third plate portion 105 of the positive-electrode plate 100 and the second plate portion 203 of the negative-electrode plate 200 are overlapped and joined to face each other. According to the present embodiment, the third plate portion 105 of the positive-electrode plate 100 is exposed obliquely above the negative-electrode plate 200. The second plate portion 203 of the negative-electrode plate 200 is exposed obliquely below the positive-electrode plate 100. A wide space exists on both sides of the direction perpendicular to the third plate portion 105 of the positive-electrode plate 100 and the second plate portion 203 of the negative-electrode plate 200. The horn and the anvil for the ultrasonic junction can be placed for easy clamping, making it possible to use the ultrasonic junction as a method of joining the junction portion.

The present embodiment provides the angle of 45° between the positive-side first plate portion 101 and the positive-side second plate portion 103 and adjusts the angle of the positive-side third plate portion 105 and the length of the negative-side second plate portion 203 to position the junction portion differently from the above-described embodiments. Under this condition, the moderating effect of stress on the junction portion was verified. According to the present embodiment, the regions A and B are 78.6% each, the distance H is 4.87 mm, the plate thickness N is 0.8 mm, and the plate thickness P is 0.6 mm. The bend R is 0.4 mm. Angles C and D are 135° each and angle E is 45°. The present embodiment showed that the junction area S is 29 mm2. The reduction rate X was 58.4%. The volume V was 300 mm3.


Twenty-eighth Embodiment


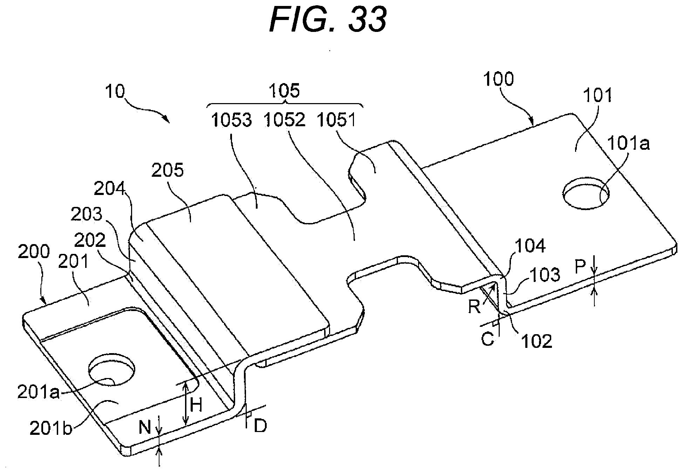

FIG. 33 illustrates an embodiment that changes the components of the busbar 10 according to the first embodiment.

The present embodiment provides a cutout portion 1052 for the third plate portion 105 of the positive-electrode plate 100. The cutout portion 1052 can provide the busbar 10 with a required resistance value.

The third plate portion 105 includes a proximal end portion 1051 that is bent at the end of the second plate portion 103 and extends with the same width as the first plate portion 101 and the second plate portion 103; a narrower cutout portion 1052 formed by cutting out from both sides in the width direction; and a distal end portion 1053 that is enlarged on both sides in the width direction to be larger than the cutout portion 1052 and extends with the same width as the second plate portion 103. The distal end portion 1053 and the negative-side third plate portion 205 of the negative-electrode plate 200 are overlapped and joined facing each other to form a junction portion therebetween. The present embodiment provides a large space on both sides of the direction perpendicular to the distal end portion 1053 and the negative-side third plate portion 205 of the negative-electrode plate 200. The horn and the anvil for the ultrasonic junction can be placed for easy clamping, making it possible to use the ultrasonic junction as a method of joining the junction portion.

The present embodiment is intended to show the validity of the stress relaxation effect when an interval between the batteries is assumed to increase as well as when the cutout portion 1052 is added to the busbar 10. While the present embodiment provides the cutout portion 1052 for the third plate portion 105, the present invention is not limited to this configuration. For example, the width of the busbar can be partially narrowed in at least one of the second plate portions 103 and 203, and the third plate portions 105 and 205.

The present embodiment is designed to double the distance between the terminals 2a and 2b of the adjacent unit batteries 2A and 2B in the module described in the first through twenty-seventh embodiments. As the distance between the terminals is doubled, the busbar 10 is given a Y-direction displacement twice as large as Y0 to be able to compare reduction rate X in the first through twenty-seventy embodiments to find the stress acting on the junction plane between the distal end portion 1053 of the third plate portion 105 of the positive-electrode plate 100 and the negative-side third plate portion 205 of the negative-electrode plate 200. The cutout portion 1052 reduces the width of the positive-side busbar material to a minimum of 37%.

According to the present embodiment, the region A is 86.5% and the region B is 100%. The distance H is 4.8 mm, the plate thickness N is 0.8 mm, and the plate thickness P is 0.6 mm. The bend R is 0.4 mm. The angles C and D are 90° each, and the angle E is 0°. The present embodiment showed that the junction area S is 76 mm2. The reduction rate X was 9.6%. The volume V is 447 mm3 because the distance between the terminals is twice as long as that of the first through the embodiments. The volume V concerning the distance between unit terminals is 224 mm3 according to the comparison under the same condition as the first through the twenty-seventh embodiments. Table 1 below shows the volume V concerning the distance between unit terminals.

Table 1

| | Region A | Region B | Distance H | Plate thickness N | Plate thickness P | Bend R | Angle C | Angle D | Angle E | Area S | Reduction rate X | Volume V |
|---|---|---|---|---|---|---|---|---|---|---|---|---|
| First Embodiment | 759 | 759 | 4.8 | 0.8 | 0.6 | 0.4 | 90 | 90 | 0 | 59 | 31.4 | 315 |
| Second Embodiment | 92.1 | 92.1 | 2.8 | 0.8 | 0.6 | 0.4 | 90 | 90 | 0 | 37 | 91.1 | 260 |
| Third Embodiment | 92.1 | 92.1 | 4.8 | 0.8 | 0.6 | 0.4 | 90 | 90 | 0 | 37 | 40.2 | 300 |
| Fourth Embodiment | 92.1 | 92.1 | 6.8 | 0.8 | 0.6 | 0.4 | 90 | 90 | 0 | 37 | 20.1 | 340 |
| Fifth Embodiment | 75.9 | 759 | 2.8 | 0.8 | 0.6 | 0.4 | 90 | 90 | 0 | 59 | 867 | 275 |
| Sixth Embodiment | 759 | 759 | 6.8 | 0.8 | 0.6 | 0.4 | 90 | 90 | 0 | 59 | 14.4 | 355 |
| Seventh Embodiment | 72.4 | 72.4 | 2.8 | 0.8 | 0.6 | 0.4 | 90 | 90 | 0 | 66 | 87.2 | 275 |
| Eighth Embodiment | 72.4 | 72.4 | 4.8 | 0.8 | 0.6 | 0.4 | 90 | 90 | 0 | 66 | 31.2 | 316 |
| Ninth Embodiment | 72.4 | 72.4 | 6.8 | 0.8 | 0.6 | 0.4 | 90 | 90 | 0 | 66 | 14.3 | 356 |
| Tenth Embodiment | 759 | 759 | 4.8 | 0.4 | 0.4 | 0.4 | 90 | 90 | 0 | 59 | 6.9 | 193 |
| Eleventh Embodiment | 759 | 759 | 4.8 | 0.6 | 0.6 | 0.4 | 90 | 90 | 0 | 59 | 22.1 | 283 |
| Twelfth Embodiment | 759 | 759 | 4.8 | 0.8 | 0.8 | 0.4 | 90 | 90 | 0 | 59 | 44.7 | 357 |
| Thirteenth Embodiment | 759 | 759 | 4.8 | 1 | 1 | 0.4 | 90 | 90 | 0 | 59 | 75.0 | 439 |
| Fourteenth Embodiment | 759 | 759 | 4.8 | 0.6 | 0.8 | 0.4 | 90 | 90 | 0 | 59 | 32.0 | 326 |
| Fifteenth Embodiment | 75.9 | 759 | 4.8 | 0.8 | 0.6 | 0.3 | 90 | 90 | 0 | 59 | 30.8 | 317 |
| Sixteenth Embodiment | 759 | 759 | 4.8 | 0.8 | 0.6 | 0.7 | 90 | 90 | 0 | 59 | 33.5 | 310 |
| Seventeenth Embodiment | 759 | 759 | 4.8 | 0.8 | 0.6 | 0.4 | 90 | 90 | 0 | 59 | 30.5 | 315 |
| Eighteenth Embodiment | 759 | 759 | 4.8 | 0.8 | 0.6 | 0.4 | 100 | 100 | 0 | 59 | 35.7 | 307 |
| Nineteenth Embodiment | 759 | 759 | 4.8 | 0.8 | 0.6 | 0.4 | 80 | 80 | 0 | 59 | 27.7 | 323 |
| Twentieth Embodiment | 86.5 | 68.8 | 4.8 | 0.8 | 0.6 | 0.4 | 90 | 90 | 0 | 59 | 26.2 | 287 |
| Twenty-first Embodiment | 75.9 | 759 | 4.8 | 0.8 | 0.6 | 0.4 | 90 | 90 | 0 | 59 | 31.5 | 356 |
| Twenty-second Embodiment | 75.9 | 759 | 4.8 | 0.8 | 0.6 | 0.4 | 90 | 90 | 0 | 59 | 31.3 | 341 |
| Twenty-third Embodiment | 75.9 | 759 | 4.8 | 0.8 | 0.6 | 0.4 | 90 | 90 | 0 | 59 | 31.8 | 365 |
| Twenty-fourth Embodiment | 75.9 | 759 | 4.8 | 0.8 | 0.6 | 0.4 | 90 | 90 | 0 | 59 | 20 | 356 |
| Twenty-fifth Embodiment | 82.4 | 82.4 | 4.8 | 0.6 | 0.6 | 0.4 | 90 | 90 | 0 | 59 | 22.1 | 283 |

| | Region A | Region B | Distance H | Plate thickness N | Plate thickness P | Bend R | Angle C | Angle D | Angle E | Area S | Reduction rate X | Volume V |
|---|---|---|---|---|---|---|---|---|---|---|---|---|
| Twenty-sixth Embodiment | 759 | 759 | 4.8 | 0.8 | 0.6 | 0.4 | 90 | 90 | 0 | 37 | 26.2 | 287 |
| Twenty-seventh Embodiment | 78.6 | 78.6 | 4.87 | 0.8 | 0.6 | 0.4 | 135 | 135 | 45 | 29 | 58.4 | 300 |
| Twenty-eighth Embodiment | 79.7 | 100 | 4.8 | 0.8 | 0.6 | 0.4 | 90 | 90 | 0 | 76 | 9.6 | 224 |
| First Comparative Embodiment | 100 | 100 | 5.8 | 0.8 | 0.8 | 1.5 | 90 | 90 | | 50.4 | 100 | 263.9 |

Table 1 lists the effects of stress relaxation and the specifications of the busbars according to the above-described embodiments. It can be seen that the embodiments can increase the junction area S compared to the comparative embodiment. Furthermore, the effect of stress relaxation is also evident compared to the comparative embodiment. The comparison between the same distances H shows that the regions A and B are reduced to provide the excellent busbar indicating the decreased reduction rate X. An increase in the distance H provides the excellent busbar indicating the decreased reduction rate X. These configurations can provide the busbar that increases the junction area S and features a volume V of 440 mm3 or less. As can be seen from the drawings, the region in physical contact with the principal terminal surface is positioned far from the junction region, making it possible to decrease the effect of the junction and provide a flat busbar. Formation of the angles C and D to be smaller than 90° also tends to provide an excellent busbar indicating a decreased reduction rate.

It can be seen that a decrease in the plate thickness increases the effect of stress relaxation. Compared to approximately solid plate materials, the busbar 10 shaped into a lap joint also features different plate thicknesses for the positive-electrode plate 100 and the negative-electrode plate 200. It may be possible to use a technique of making one of the positive-electrode plate 100 and the negative-electrode plate 200 thinner than the other to suppress an increase in the resistance while ensuring the stress moderating effect.

The description below explains the effects of each embodiment based on the results shown in Table 1.

1. Relationship between Height and Thickness of Busbar 10

(1) The ratio between the height H of the busbar 10 and the plate thickness N or P favorably satisfies the following relationship.

$$2.0 < (H/N) < 20 \text{ or } 2.0 (H/P) \leq 20$$

The ratio between the height and the plate thickness of the busbar 10 is favorably at least larger than 2.0. Both the positive-electrode plate 100 and the negative-electrode plate 200 can be effectively deformed against stress. The ratio between the height and the plate thickness of the busbar 10 is favorably 20 or less. This can prevent the overall size of the busbar 10 from increasing. Alternatively, the busbar 10 can ensure sufficient plate thickness.

(2) It is favorable to satisfy $4.0 \leq (H/N) < 12$ or $4.0 \leq (H/P) < 12$. A favorable strength reduction effect is available when stress is applied. The small busbar 10 is available because the height of the busbar 10 is not excessive.

(3) It is favorable to satisfy $2.0 < (H/N) < 4.0$ or $2.0 < (H/P) < 4.0$. The height of the busbar 10 can be reduced, which is more favorable than the configuration (2) above regarding the miniaturization of the busbar 10.

(4) It is favorable to satisfy $12 \leq (H/N) < 20$ or $12 \leq (H/P) < 0$. This is more favorable than the configuration (2) above regarding the strength reduction effect when stress is applied.

2. Relationship between Junction Area S and Region A or B

The ratio between junction area S and region A (S/A) or the ratio between junction area S and region B (S/B) is favorably 0.2 or more to ensure sufficient junction area S between the busbar 10 and the positive-electrode terminal 2a, or between the busbar 10 and the negative-electrode terminal 2b. The busbar 10 is provided between the positive-electrode terminal 2a of the unit battery 2A and the negative-electrode terminal 2b of the adjacent unit battery 2B. The busbar 10 is favorably not too large.

For this reason, the area ratio between the junction area S and the region A or B is favorably 2.0 or less, and more favorably 1.0 or less. This makes it possible to ensure a sufficient junction area between the busbar 10 and the positive-electrode terminal 2a or between the busbar 10 and the negative-electrode terminal 2b, a wide current path between the busbar 10 and the positive-electrode terminal 2a or between the busbar 10 and the negative-electrode terminal 2b, and suppress electrical resistance.

3. Relationship between Thickness (P) of Positive-electrode Plate and Thickness (N) of Negative-electrode Plate

(1) The busbar 10 can be easily manipulated when the thickness (P) of the positive-electrode plate 100 is equal to the thickness (N) of the negative-electrode plate 200 (P=N). For example, the positive-side third plate portion 105 becomes as tall as the negative-side third plate portion 205, facilitating the work of processing the positive-side third plate portion 105 and the negative-side third plate portion 205 or placing other members.

(2) The following are features of the busbar composed of the aluminum positive-electrode plate 100 joined to the copper negative-electrode plate 200. For example, when the thickness (N) of the negative-electrode plate is larger than the thickness (P) of the positive-electrode plate (P<N), this signifies the use of a relatively large amount of copper member whose electrical resistance is lower than aluminum. Electrical resistance can be reduced, and heat generation can be suppressed. When the thickness (P) of the positive-electrode plate is larger than the thickness (N) of the negative-electrode plate (P>N), the amount of copper used can be reduced. This can contribute to reducing the cost of the battery pack 1 composed of many stacked unit batteries 2.

4. Size of Bent Portion R

The sufficiently wide junction area S can be ensured between the positive-electrode plate 100 and the negative-electrode plate 200 by increasing a bending ratio (N/R) between the plate thickness N of the positive-electrode plate 100 and the R of the bent portions 102, 104, or 106 of the positive-electrode plate 100; or a bending ratio (P/R) between the plate thickness P of the negative-electrode plate 200 and the R of the bent portions 202, 204, or 206 of the negative-electrode plate 200. The bending ratio (N/R or P/R) is favorably set to 3.0 or less from the viewpoint of manufacturability such as ease of processing. A decrease in the bending ratio (N/R or P/R) facilitates the manufacturability.

The bending ratio (N/R or P/R) is favorably set to 0.5 or more to ensure the sufficient junction area S. The bending ratio (N/R or P/R) is favorably set to a range of 1.0 or more and less than 2.0 to be able to ensure a sufficiently wide junction portion. It is possible to improve the manufacturability of the busbar 10 including the bent portions 102, 104, 106, 202, 204, and 206 by setting the bending ratio (N/R or P/R) to a range of 2.0 or more and 3.0 or less.

5. Overlap between Positive-electrode Plate 100 and Negative-electrode Plate 200

(1) The following are features of USW to join the aluminum positive-electrode plate 100 and the copper negative-electrode plate 200.

Suppose the height H of the positive-side third plate portion 105 of the positive-electrode plate 100 is smaller than the negative-side third plate portion 205 of the negative-electrode plate 200, and the negative-side third plate portion 205 is joined to the positive-side third plate portion 105 so that the former overlaps the latter. Then, even if the USW deforms the positive-electrode plate 100, the deformed part is positioned below. The deformed part can be prevented from contacting the members around the busbar 10 and damaging the busbar 10 during assembly, thus improving assembly workability.

During the USW junction, it may be favorable to join the positive-electrode plate 100 and the negative-electrode plate 200 so that an anvil is placed to get contact with the aluminum positive-electrode plate 100 and a horn is placed to get contact with the copper negative-electrode plate 200. The horn is placed on the high-strength metal side, making it possible to inhibit the busbar 10 from being deformed or damaged due to the USW junction. The anvil forms an irregular USW mark (junction mark) on the USW junction portion of the positive-electrode plate 100. The horn forms an irregular USW mark on the USW junction portion of the negative-electrode plate 200.

(2) The following are features of laser welding to join the aluminum positive-electrode plate 100 and the copper negative-electrode plate 200.

For example, the positive-electrode plate 100 (upper) can overlap the negative-electrode plate 200 (lower) to be welded together. This enables the height H of the negative-side third plate portion 205 of the copper negative-electrode plate 200 to be lower than the positive-side third plate portion 105 of the aluminum positive-electrode plate 100. The configuration of placing the copper negative-electrode plate 200 below the aluminum positive-electrode plate 100 can make the negative-electrode plate 200 smaller than the positive-electrode plate 100, reduce the amount of copper used in the busbar 10, and decrease the price or weight of the busbar 10. Generally, copper alloys are more expensive and heavier than aluminum alloys. It is possible to contribute to providing the low-cost or lightweight battery pack 1.

For example, the negative-electrode plate 200 (upper) can overlap the positive-electrode plate 100 (lower) to be welded together. The configuration of placing the copper negative-electrode plate 200 over the aluminum positive-electrode plate 100 increases the amount of copper used in the busbar 10, showing the advantage of lowering the electrical resistance of the busbar 10. Generally, copper alloys indicate a lower electrical resistivity than aluminum alloys. It is possible to contribute to providing the battery pack 1 using the low-resistance busbar 10.

Being made of aluminum or copper signifies the inclusion of pure aluminum or pure copper, or aluminum or copper that contains favorable additive elements to acquire the required characteristics. The configuration can include more than one of the above features. For example, it is possible to include the feature 5 above and any of the features 1 through 4 above. The busbar 10 can be optimized for USW or laser welding.

The above-described embodiments are examples. There have been described examples of providing the bent portions 102, 202, 104, and 204, for example, for the regions connecting the first plate portions 101 and 201, the second plate portions 103 and 203, and the third plate portions 105 and 205. Instead, the bent portions 102, 202, 104, and 204, for example, may be replaced by curved, tilted, or stepped portions. The structures illustrated in the above-described embodiments may be combined.

There are no particular limitations on the method of attaching the busbar 10 to the voltage detection line according to the present invention. It may be favorable to use ultrasonic junctions, laser welding, screw fastening, or swaging, for example.

The present invention is not limited to busbars that connect lithium-ion secondary batteries and can also be applied to busbars to connect secondary batteries such as nickel-metal hydride batteries, nickel-cadmium batteries, or lead-acid batteries that use water-soluble electrolytes. The present invention can also be applied to busbars to connect storage elements such as lithium-ion capacitors and electrolytic double-layer capacitors.

The present invention provides the small junction busbar that is shaped like a lap joint, ensures a wide junction area for the junction portion, contacts with the electrode terminals, and includes an approximately flat overlapping surface, making it possible to reduce the stress applied during the use of the battery pack, improve electrical contact with the battery, and ensure a wide junction area. The capability of widening the junction portion can easily increase the junction strength. It is possible to provide the miniaturized battery pack at low risk of fatigue failure on the busbar. The busbar according to the present invention can be modified in various ways. Reference Signs List

1: battery pack, 2, 2A, 2B: unit battery, 2a: positive-electrode terminal (electrode terminal), 2a1: principal terminal surface, 2b: negative-electrode terminal (electrode terminal), 2b1: principal terminal surface, 10: busbar, 100: positive-electrode plate (first conductive plate), 100a: first base end portion, 100b: first tip portion, 101: first plate portion (positive-side first plate portion), 101a: hole, 102, 104, 106: bent portion, 103: second plate portion (positive-side second plate portion), 105: third plate portion (positive-side third plate portion), 105a: first junction portion, 107: fourth plate portion (positive-side fourth plate portion), 200: negative-electrode plate (second conductive plate), 200a: second base end portion, 200b: second tip portion, 201: first plate portion (negative-side first plate portion), 201a: hole, 201b: thin portion, 202, 204, 206: bent portion, 203: second plate portion (negative-side second plate portion), 205: third plate portion (negative-side third plate portion), 205a: second junction portion

## Claims

1. A battery pack comprising:

   a battery group in which a plurality of unit batteries each including a first electrode terminal and a second electrode terminal are stacked so that the first electrode terminal of one of adjacent unit batteries is adjacent to the second electrode terminal of the other unit battery in a stacking direction; and
   a busbar connecting the first electrode terminal of the one unit battery with the second electrode terminal of the other unit battery,
   wherein the busbar includes a first conductive plate connected to the first electrode terminal of the one unit battery, a second conductive plate connected to the second electrode terminal of the other unit battery, and a step portion that stepwise bends at least one of the first conductive plate and the second conductive plate.

2. The battery pack according to claim 1,

   wherein the first conductive plate includes a first base end portion joined to a first electrode terminal of one of the unit batteries, a first tip portion extending from an end of the first base end portion in a direction to approach a second electrode terminal of the other unit battery along the stacking direction of the unit batteries, and a first step portion placed between the first base end portion and the first tip portion;
   wherein the first step portion includes a bent portion toward the first base end portion bent at an end of the first base end portion in a direction to rise from the first base end portion, a first raised portion rising from the first base end portion, and a bent portion toward the first tip portion that is bent in a direction to approach a second electrode terminal of the other unit battery along the stacking direction of the unit battery at an end of the first raised portion in a rising direction; and
   wherein the first tip portion includes a first junction portion that is overlapped and joined to the second conductive plate.

3. The battery pack according to claim 2,

   wherein the second conductive plate includes a second base end portion joined to a second electrode terminal of the other unit battery, a second tip portion extending from an end of the second base end portion in a direction to approach a first electrode terminal of the one unit battery along a stacking direction of the unit battery, and a second step portion placed between the second base end portion and the second tip portion;

wherein the second step portion includes a bent portion toward the second base end portion bent at the end of the second base end portion in a direction to rise from the second base end portion, a second raised portion rising from the bent portion toward the second base end portion, and a bent portion toward the second tip portion bent at the end of the second raised portion in a rising direction and in a direction to approach the first electrode terminal of the one unit battery along the stacking direction of the unit battery; and

wherein the second tip portion includes a second junction portion that is overlapped and joined to a first tip portion of the first conductive plate.

4. The battery pack according to claim 3,
wherein the first junction portion and the second junction portion are overlapped and joined in a direction to intersect the stacking direction of the unit battery.

5. The battery pack according to claim 4,

wherein the first raised portion rises from the bent portion toward the first base end portion in a direction to intersect the stacking direction and in a direction to leave or approach the unit battery; and
wherein the second raised portion rises from the bent portion toward the second base end portion in a direction to intersect the stacking direction and in a direction to leave or approach the unit battery.

6. The battery pack according to claim 4,

wherein the first raised portion is formed slantwise against the first base end portion in a direction from the bent portion toward the first base end portion to the stacking direction corresponding to the rising direction; and
wherein the second raised portion is formed slantwise against the second base end portion in a direction from the bent portion toward the first base end portion to the stacking direction corresponding to the rising direction.

7. The battery pack according to claim 3,

wherein the first junction portion includes an extension portion extending from the bent portion toward the first tip portion in a direction to approach the second electrode terminal of the other unit battery along the stacking direction of the unit battery and a first falling portion that is bent and falls at the end of the extension portion in an extending direction;
wherein the second tip portion includes a bent portion toward the second base end portion bent at the end of the second base end portion in a direction to rise from the second base end portion and a second raised portion rising from the bent portion toward the second base end portion; and
wherein the first falling portion and the second raised portion are overlapped and joined in the stacking direction.

8. The battery pack according to claim 2,
wherein the first raised portion gradually rises from the bent portion toward the first base end portion in a direction to approach the second electrode terminal of the other unit battery along the stacking direction of the unit battery; and
wherein the first tip portion gradually falls from the bent portion toward the first base end portion in a direction to approach the second electrode terminal of the other unit battery along the stacking direction of the unit battery.

9. The battery pack according to claim 6,
wherein the bent portion toward the first base end portion and the bent portion toward the second base end portion form an angle smaller than 90°.

10. The battery pack according to claim 4,

wherein the first tip portion is made of aluminum and the second tip portion is made of copper;
wherein the first junction portion and the second junction portion are joined to each other through the use of ultrasonic junction by sandwiching the first tip portion and the second tip portion between an anvil and a horn;
wherein the first tip portion includes a junction mark formed by the anvil of the ultrasonic junction; and
wherein the second tip portion includes a junction mark formed by the horn of the ultrasonic junction.

11. The battery pack according to claim 4,

wherein the first tip portion is made of aluminum and the second tip portion is made of copper;
wherein the first junction portion and the second junction portion are joined through an ultrasonic junction;
wherein the first tip portion and the second tip portion are joined to be overlapped vertically in the rising direction of the first raised portion and the second raised portion; and
wherein the first tip portion is positioned below the second tip portion.

# FIG. 1

# FIG. 2

# FIG. 3

# FIG. 4

(a)

(b)

# FIG. 5

# FIG. 6

# FIG. 7

# FIG. 8

# FIG. 9

# FIG. 10

## FIG. 11

## FIG. 12

# FIG. 13

# FIG. 14

# FIG. 15

# FIG. 16

# FIG. 17

# FIG. 18

# FIG. 19

# FIG. 20

# FIG. 21

# FIG. 22

(a)

(b)

# FIG. 23

(a)

(b)

# FIG. 24

# FIG. 25

## FIG. 26

## FIG. 27

## FIG. 28

## FIG. 29

# FIG. 30

EP 4 507 110 A1

# FIG. 31

(a)

(b)

47

# FIG. 32

(a)

(b)

# FIG. 33

| | INTERNATIONAL SEARCH REPORT | International application No. |
|---|---|---|
| | | **PCT/JP2023/015806** |

**A. CLASSIFICATION OF SUBJECT MATTER**

*H01M 50/503*(2021.01)i; *H01M 50/209*(2021.01)i; *H01M 50/516*(2021.01)i; *H01M 50/522*(2021.01)i;
*H01M 50/526*(2021.01)i
FI: H01M50/503; H01M50/209; H01M50/516; H01M50/522; H01M50/526

According to International Patent Classification (IPC) or to both national classification and IPC

**B. FIELDS SEARCHED**

Minimum documentation searched (classification system followed by classification symbols)

H01M50/503; H01M50/209; H01M50/516; H01M50/522; H01M50/526

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-152373 A (GS YUASA INTERNATIONAL LTD.) 31 August 2017 (2017-08-31) paragraph [0126], fig. 18 | 1-9 |
| Y | paragraph [0126], fig. 18 | 10-11 |
| X | WO 2020/183817 A1 (VEHICLE ENERGY JAPAN INC.) 17 September 2020 (2020-09-17) paragraphs [0011]-[0058], fig. 1-8 | 1-2, 8 |
| Y | paragraphs [0011]-[0058], fig. 1-8 | 10-11 |
| A | JP 2011-510433 A (BYD COMPANY LTD.) 31 March 2011 (2011-03-31) fig. 35-38, 49-51 | 1-11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 July 2023** | **25 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/015806**

| Patent document cited in search report | | | Publication date (day/month/year) | Patent family member(s) | | | Publication date (day/month/year) |
|---|---|---|---|---|---|---|---|
| JP | 2017-152373 | A | 31 August 2017 | US | 2017/0244076 | A1 | |
| | | | | paragraph [0151], fig. 18 | | | |
| | | | | CN | 107104217 | A | |
| WO | 2020/183817 | A1 | 17 September 2020 | US | 2022/0149487 | A1 | |
| | | | | paragraphs [0019]-[0066], fig. 1-8 | | | |
| | | | | EP | 3940811 | A1 | |
| | | | | CN | 113519086 | A | |
| JP | 2011-510433 | A | 31 March 2011 | US | 2009/0159311 | A1 | |
| | | | | fig. 35-38, 49-51 | | | |
| | | | | WO | 2009/079965 | A1 | |
| | | | | EP | 2618396 | A1 | |
| | | | | CN | 201311948 | Y | |
| | | | | KR | 10-2010-0084581 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007073266 A
- JP 2017073398 A
- WO 2020183817 A
- JP 2016115458 A